# EUROPEAN PATENT SPECIFICATION

(11) **EP 2 410 398 B1**
(45) Date of publication and mention of the grant of the patent: **31.07.2013**
(21) Application number: 11151751.2
(22) Date of filing: 21.01.2011
(51) Int. Cl.: G06F 1/16

(54) **Tower computer system**
System aus Computern mit Tower-Gehäuse
Système informatique de tour

(30) Priority: 20.07.2010 CN 201010238037
(43) Date of publication of application: 25.01.2012
(73) Proprietor: Cheng, Liang-Ho, Jhongli City, Taoyuan County 320 (TW)
(72) Inventor: Cheng, Liang-Ho, Jhongli City, Taoyuan County 320 (TW)
(74) Representative: Dufay, Nicolas Henri

(56) References cited:
- EP-A1- 0 892 336
- US-A1- 2002 166 010
- US-A1- 2004 184 251
- US-A1- 2009 129 001

## Description

### BACKGROUND OF THE INVENTION

### (a) Field of the Invention

The present invention relates to a tower computer system, and more particularly to a tower computer system having a chassis provided for installing a motherboard vertically at a middle section of a widthwise surface of the chassis to form separate chambers and separate wind fields.

### (b) Description of the Related Art

The effect of Moore's Law shows that the performance of products manufactured by chip manufacturing technologies is directly proportional to the power consumption and inversely proportional to the rise of temperature. As a result, products of the same stage have a power consumption equivalent to the performance capability. Main systems of computers, servers or game players composed of chip products generally come with a design of a heat sink. In addition to the requirement of blowing air from the front at a heat source (the inventor of the present invention has filed several patent applications for the structure of heat sinks that collect air and blow air from the front), an air inlet of the fan is designed at a position closest to the edge of the case to constitute the priority of the heat dissipation of the system.

Secondly, the efficiency of the fan for dissipating heat of the case is determined by indoor ventilation and air exchange, and air is a fluid dispersed and filled into a space, and thus the method of installing the fans one by one on each heat sink for sucking air directly from the outside of the case is set for the following simple calculation, that is, the air supply quantity of each fan per unit time (q/t) is summed and then the sum is divided by the volume (Q) of the box to obtain the number of times (N) of air exchange. In other words, [(q1/t+q2/t+...) /Q] =N/t, which can be used for calculating a larger number of times which indicates the quantity of air flowing in the case within the time unit for a higher frequency of heat dissipations and exchanges to dissipating the heat from the box. If the assembly can avoid the range of wind blown by each fan causing the reduction of the wind force, then a relatively faster flow speed can be achieved by a small pressure difference even though there is not enough total area of the ventilation holes of the box. As a result, the total quantity of wind can be discharged successfully without requiring an additional exhaustion fan or reducing the overall efficiency of the heat dissipation operation.

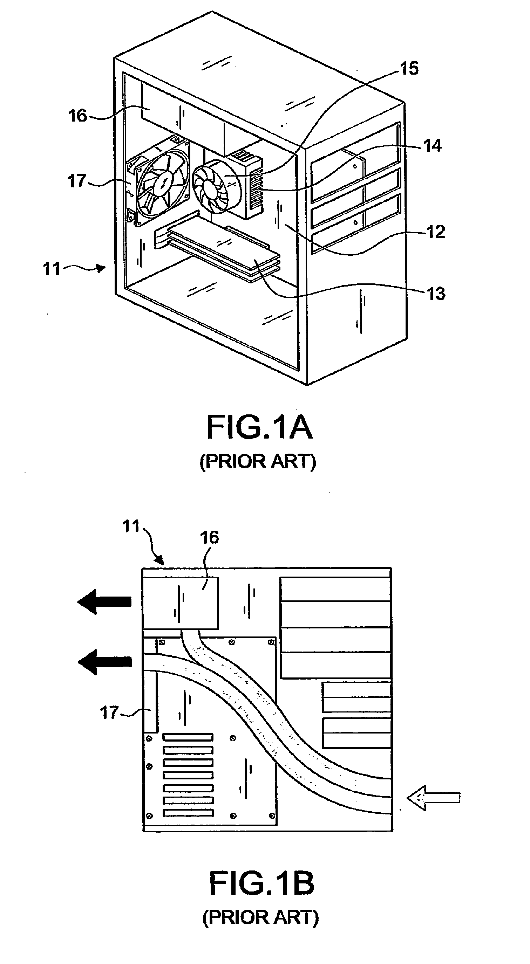

With reference to FIGS. 1A and 1B for a desktop computer in a tower square framed case structure which is the most representative type of structure now, and the conventional structure of a main system generally installs all components into a case 11 from a single lateral side, such that a motherboard 12 with a chip heat sink and a display expansion component 13 are installed on a internal lateral layer of the case 11, such that a fan 15 on a heat sink 14 has no chance to have a heat exchange with the external cooler air, and the fan can only whirl the interior of the case 11. Even if there is a change to the structure of the case and the installation of components, the fan of the power supply device 16 and an additionally installed fan 17 are used for blowing air indirectly to dissipate the heat gradually, and the sequence of the heat dissipation of the system is reverse and thus resulting in a poor heat dissipation effect. Furthermore, the internal lateral layer of the case is aligned outward, and components such as a hard disk, an optical disk drive and a support frame for installing the aforementioned components constitute many obstacles and dead corners for the ventilation. Therefore, the temperature continuously circulates inside the case and gets higher and higher. Even with the installation of additional fans, and the use of good chip heat sinks, the heat dissipation effect cannot be improved.

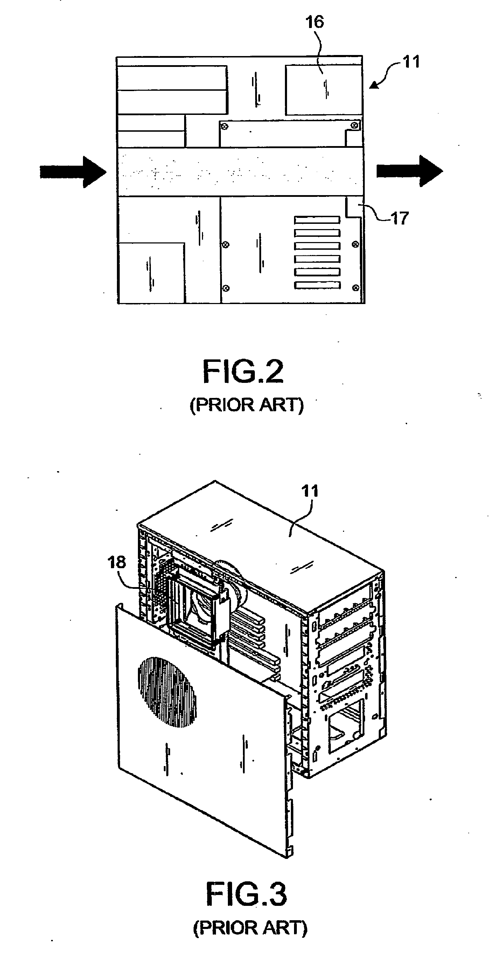

As shown in FIG. 2, Intel, a major chip manufacturing focuses on the overall system heat dissipation to provide a solution, and the measure taken is to rearrange the component modules on the motherboard, and then proposes a BTX specification, wherein the left and right sides of the assembly of the case 11 are switched, and a heat sink with a wind guide cover for blowing air sideway is invented and applied. More specifically, the fan 15 on the heat sink 14 is moved to a position close to a front end of a front panel of the case, and the wind guide cover is used for guiding external cooler air sucked by the fan into the case in a sideway direction, while blowing the external air at the heat sink 14 and the backside of the motherboard to achieve an expected performance by forming a linear airflow in the case 11.

However, this technical measure has taken the heat dissipation of the system into consideration, that is, it is necessary to suck external cooler air directly from outside of the case by the fan installed on the chip heat sink and blow the air at the backside of the motherboard, but all component modules are still required to be installed into the case 11 from a lateral side as specified in the ATX specification. This specification switches the original left and right directions for installing the system without many changes in other aspects. Therefore, the fan installed on the power supply device 16 and additional fans 17 are still used for the system heat dissipation. In such indirect transmission, the heat is dissipated gradually. In general, two fans can be connected for the use of a same wind field, and the maximum air exchange quantity is only slightly greater than one of the fan with the largest wind capacity. In other words, despite many fans installed, most of the quantity of the wind are offset with each other and cannot be accumulated. Furthermore, internal components and support frames for installing these components constitute many dead corners to produce a reverse pressure, and such reverse pressure will block the airflow from being spread out, exchanged and delivered. As a result, a linear airflow cannot be achieved, and the amount of airflow corresponding to the number of fans cannot be made. Furthermore, the airflow blowing from lateral sides and used for exchange heat with a heat sink has less effect than the airflow blowing from the front side. These drawbacks give rise to the short life cycle of products of the related specification and exclusively specified component modules such as the heat sinks and cases, and these products are not available in the retailed market anymore since 2006. Nevertheless, the detailed factors and statements of the BTX specification is still listed and provided for comparison and reference on Information part of Intel website. Thus, no more descriptions are given here.

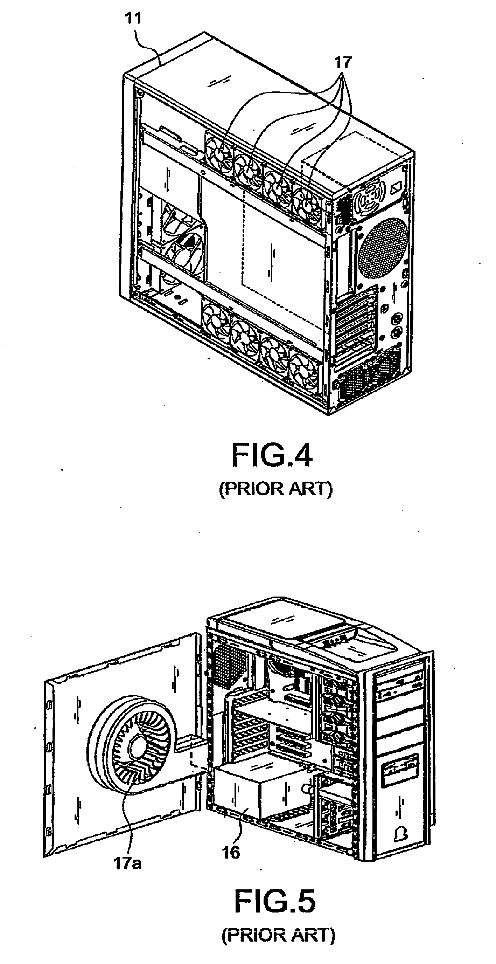

With reference to FIG. 3 for a patented technology disclosed by Taiwan Pat. No. M255449, a wind guide cover 18 is used for guiding external cooler air sucked by a fan into the case 11, and the cool air blows from the front side of the fan at a heat sink. Although the motherboard is still situated on the internal lateral layer of the case to improve the heat dissipation effect of a chip, yet dead corners stopping airflow still exist in the case and the assembling process is inconvenient. All these drawbacks have not been overcome. With reference to FIG. 4 for a patented technology disclosed by M343188, the volume of the case is increased for installing more fans 17 along a side of the motherboard, such that a large quantity of air is sent from the outside into the case for an exchange of heat whirled by the fans as if there were no case enclosing the system. However, without changing the position of the motherboard installed at the internal lateral layer of the case, this technology involving a large case and many fans incurs not only a high manufacturing cost but also an excessive occupied space, causing inconvenience to its use, and creating a constriction to users.

With reference to FIG. 5 for a patented technology disclosed by Taiwan Pat. No. M363771, a quick installing and removing device is added, and the position of installing the power supply device 16 is changed to a position under the motherboard to increase the distance between the expansion slot and the bottom of the case, such that the space for installing the expansion card and sucking air is increased to provide a sufficient air sucking distance, and a very large multi-vane turbofan 17a is used for sucking air. Obviously, the result is the same as that of the patented technology disclosed in Taiwan. Pat. No. M343188. Besides the drawback of having a too-large case, the additional installed multi-vane turbofan causes tremendous noise, and a computer user may feel like staying in the environment of a factory.

In the aforementioned methods, fans are added or increased, but the improvement or remediation is not cost-effective.

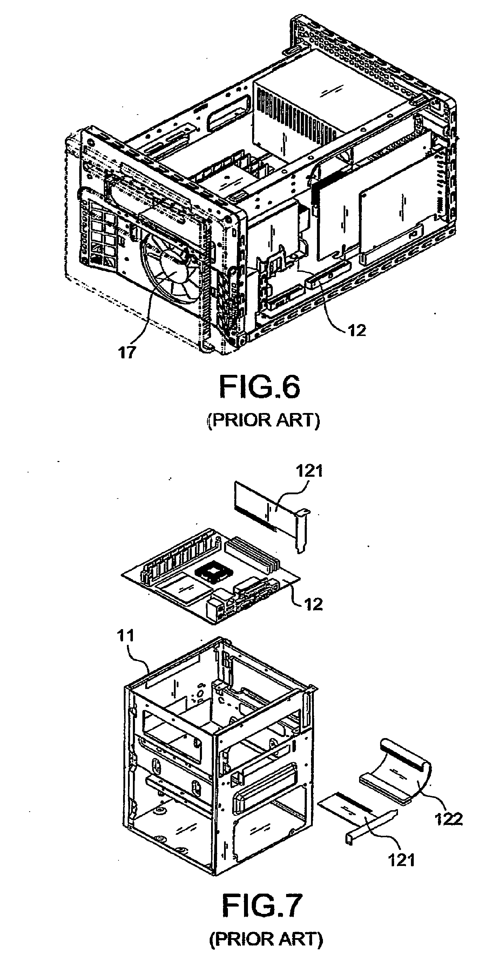

With reference to FIG. 6 for an embodiment of a Pico- BTX system as disclosed in Taiwan. Pat. No. M261746, although this patented technology can provide a solution to improve the heat dissipation by sucking air from the outside into the case and is without the restriction of a single installation direction, it is a pity that the motherboard 12 having chips and needing heat dissipation most is installed at the bottom of the case, and the structure of the horizontal motherboard 12 usually accumulates dust. The conventional system having the drawbacks of a single wind field and a single chamber assembly has not been improved much, and the indirect heat exchange as specified in the BTX specification is still adopted, and a heat sink with sideway airflow and a lower heat dissipation effect is adopted so that a higher-performance product with larger power consumption is not allowed for collaboration. Moreover, as the component modules are positioned in a way of being stacked one and another, the miniaturized case is restricted by fixed frames necessarily on both sides and hardly retards the operation of assembling the system. Furthermore, the components of the case and the material of the heat sink in accordance with the Pico-BTX specification no longer have the usefulness of exchanging the component modules of the tower system.

With reference to FIG. 7 for a patented technology disclosed in Taiwan Pat. No. M361201, the case 11 is a multi-layer structure provided for connecting an expansion card 121 to the bottom of the motherboard 12. Although a flat cable 122 can be used for installing the expansion card 121 more flexibly, it wastes too much space in a small system, and the horizontal motherboard 12 and support frame have the same drawbacks of the aforementioned Taiwan Pat. No. M261746.

There are other related patents such as a support frame that can be turned over and disassembled easily, but same as the aforementioned patents, these patents still have not considered the factors of the sequence of heat dissipating airflow, and the components are installed from the inside to the outside. Even though the chip products with fans are mounted, the outwardly aligned bottom surface of the support frame results in blocking the air inlet and failing to suck cooler air into the case from the outside.

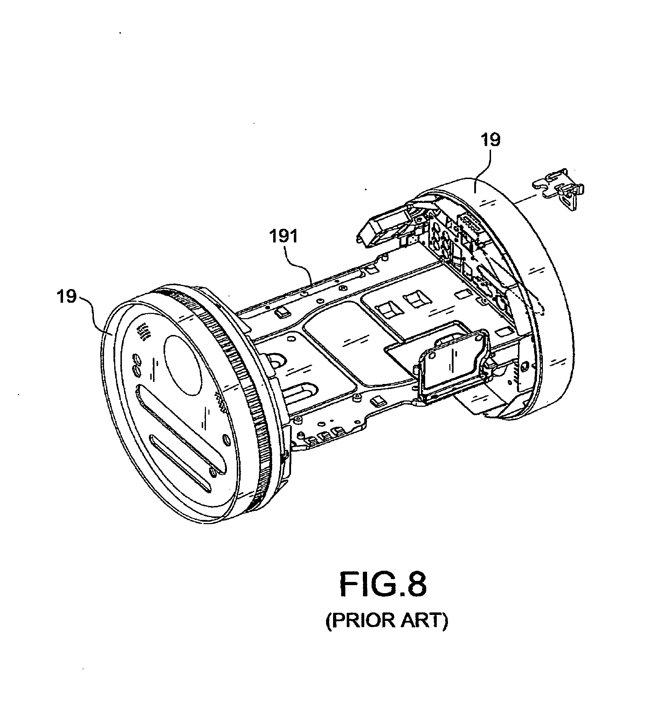

With reference to FIG. 8 for a patented technology as disclosed in Taiwan Pat. No. I274980, the overall structure comprises of a pair of circular or polygonal support modules 19 suspended in the air and connected with each other into a board support frame 191 used for the assembly, and form two non-vertical separated containing spaces. As disclosed in this patent, "the computer system structure" aims to break through the conventional design of a square framed tower case structure, and provide a function similar to a portable stereo. Moreover, it states that the previous computer is used as a computer only without add-on functions and thus such computer system has low economic benefit and fails to comply with the cost-effective requirements of modem people. In the meantime, damages caused by the loss or missing of private and confidential data stored in the computer system must be reduced, and thus the add-on function and expandability of the existing product are sacrificed. The horizontal computer system is used for carrying a single Pico-BTX motherboard specification, not only losing the diversified using value of the expandability of the computer product, but also inheriting the poor convection effect of the air in the conventional computer system.

In summation of the description above, regardless of installing all component modules from a single lateral side into the chassis, the prior art installs the motherboard that most requires the heat dissipation at a internal lateral layer of the case. As a result, the issues of ventilation, heat dissipation, installation of expanded devices and spatial volume cannot be taken care at the same time, regardless of the change, thought or innovation for the internal structure.

As chip manufacturing technology advances, many low-power components including the communication, network, video and display expansion cards are integrated onto the motherboard to produce a simplified computer, and thus the performance of these expansion cards has the performance similar to a thin client computer only, and such products disappear from the market in no time. Particularly, products like display and graphic cards consume power not less than a computing processor on the motherboard, so that they are not replaced by the thin client computer. Therefore, products such as display and graphic cards require a heat sink similar to that for the computing processor. However, the expansion slots of the motherboard still adopts an interval of 2 cm apart from each other, and the present existing expansion cards generally have pins aligned in a direction towards the air sucking inlet of the fan, and the motherboard 13 as shown in FIG. 1A is installed at the internal lateral layer of the case, such that if the expansion cards are inserted one by one, there will be a problem of installing a thin fan. A normal heat dissipation operation cannot be performed, and thus the conditions of using an expanded component module which is very different from the thin client computer cannot be used. Obviously, the prior art requires further improvements.

US Patent publication No. 2009/129001A1 discloses a computer host having two layers inside a chassis, a partition, a first circuit board, a second circuit board, and an electrical connecting device. The partition divides the interior of the chassis into a first accommodation space and a second acccommodation space. The first circuit board and the second circuit board are disposed on two sides of the partition respectively, and are respectively located in the first accommodation space and the second accommodation space. The electrical connecting device is used to electrically connect the first circuit board and the second circuit board, so that the first and second circuit boards together form a complete electonic circuit system for the operation of the computer host.

Base on the features disclosed, the chassis is like a drawer not a tower and there are two layers inside a chassis, providing for two circuits.

EP Patent publication No. 0892336 A1 discloses composite computer housing protects electronic components against shock and vibration. The housing has a mid-plane which divides the housing into a chassis section and a mainboard section. The chassis section holds hard disk divides. The mainboard section holds a mainboard cards, a processor unit and other electronic components. A composite side cover assembly, having multiple layers, encloses the housing and provides a shell to inhibit flexion of the housing. The side cover presses against any number of the electronic components in the mainboard section to minimize vibration of these components and to enable the electronic components to provide internal support to the housing.

### SUMMARY OF THE INVENTION

The primary object of the present invention is to provide a tower computer system having a mounting assembly of a tower chassis for facilitating users to install a motherboard vertically and divide the chassis into two back-to-back assembling chambers, so as to reduce the length of the chassis to appropriate length and height, increasing the load carrying capacity of the chassis, and improve the convenience of the installation and expansion upgrade, and using separated wind fields to improve the heat dissipation efficiency.

Another object of the present invention is to provide a tower computer system having a support module installed vertically adjacent to a motherboard to facilitate installing expanded electronic components.

In order to achieve the above-mentioned objects, the invention includes a tower computer system according to Claim 1.

According to the invention, the mounting assembly comprises a front connecting plate and a rear connecting plate protruding from internal sides of the front and rear racks of the tower chassis respectively. Meanwhile, a connecting board is coupled between the front and rear connecting plates.

In addition, the bottom and rear rack of the tower chassis include plurality of ventilation holes formed at a middle section.

Further features of the preferred embodiment of the invention are detailed in claims 4 through 11.

### BRIEF DESCRIPTION OF THE FIGURES

FIG. 1A is a perspective view of a conventional desktop computer;
FIG. 1B is a schematic view of the wind field of the structure in FIG. 1A;
FIG. 2 is a schematic view of a conventional Intel BTX computer;
FIG. 3 is a perspective view of a computer according to Taiwan Pat. No. M255449;
FIG. 4 is a perspective view of a computer according to Taiwan Pat. No. M343188;
FIG. 5 is a perspective view of a computer according to Taiwan Pat. No. M363771;
FIG. 6 is a perspective view of a computer according to Taiwan Pat. No. M261746;
FIG. 7 is a perspective view of a computer according to Taiwan Pat. No. M361201;
FIG. 8 is a perspective view of a computer according to Taiwan Pat. No. 1274980;
FIGS. 9A, 9B and 9C are an exploded view, a perspective view and a top view of a preferred embodiment of the present invention respectively;
FIG. 10 is an exploded view of another preferred embodiment of the present invention;
FIG. 11 is a perspective view of another preferred embodiment of the present invention;
FIG. 12 is a cross-sectional view of another preferred embodiment of the present invention;
FIGS. 13A~13E show perspective exploded views, perspective view and schematic spread-opened views of the tower chassis substantially in the shape of an L-shaped slot and combined with the support module respectively;
FIGS. 14A~14 C show an exploded view and a perspective view of a U-shaped slot combined with a lateral support frame of the tower chassis and a schematic view of lifting the tower chassis open respectively;
FIG. 15 is an exploded view of a first application of the present invention;
FIG. 16 is an perspetive view of a first application of the present invention;
FIG. 17A is a cross-sectional view of FIG. 16;
FIG. 17B is a cross-sectional view of FIG. 16 without the second electric connection access port as depicted in FIG. 17A;
FIG. 18 is an exploded view of a second application of the present invention;
FIG. 19 is a perspective view of a chassis of a second application of the present invention;
FIG. 20 is a perspective view of a second application of the present invention;
FIG. 21 is a perspective exploded view of a third application of the present invention;
FIG. 22 is a perspective view of a third application of the present invention; and
FIG. 23 is a perspective view of a fourth application of the present invention.

### DETAILED DESCRIPTION OF THE PREFERRED EMBODIMENT

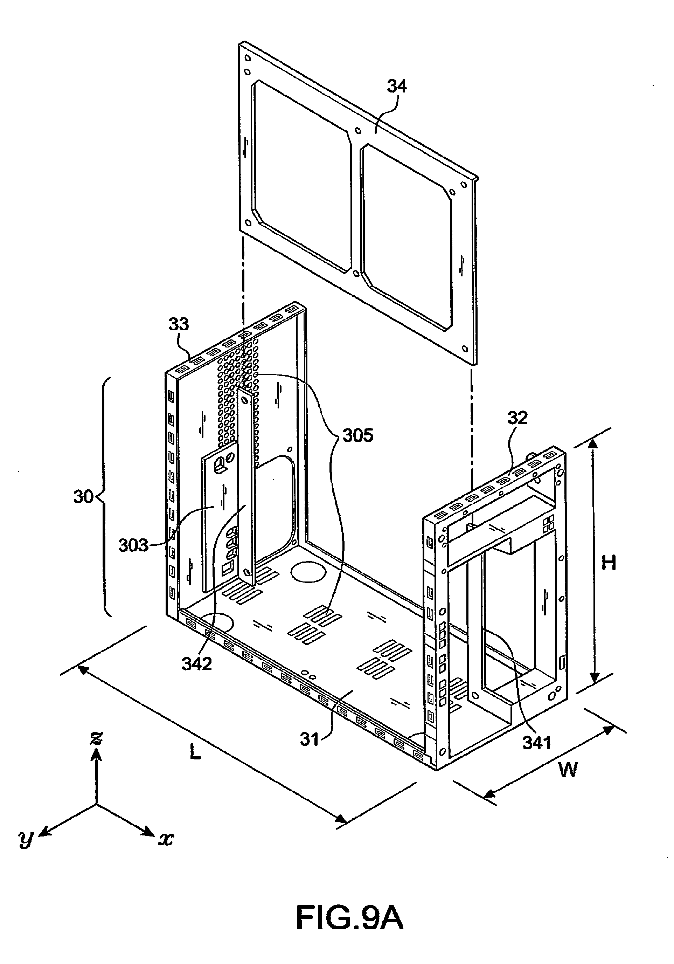

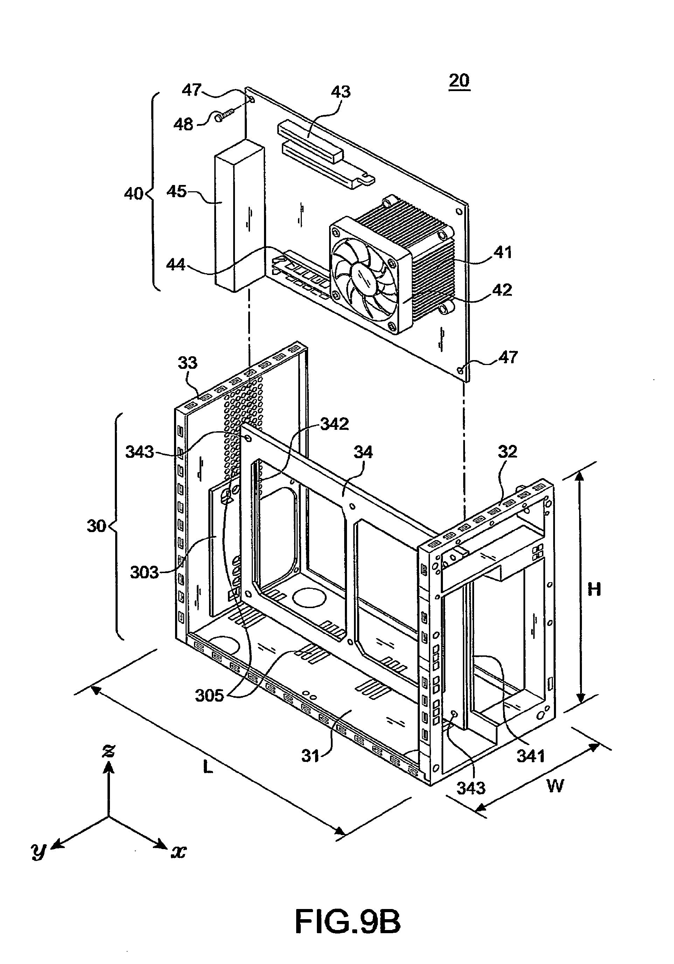

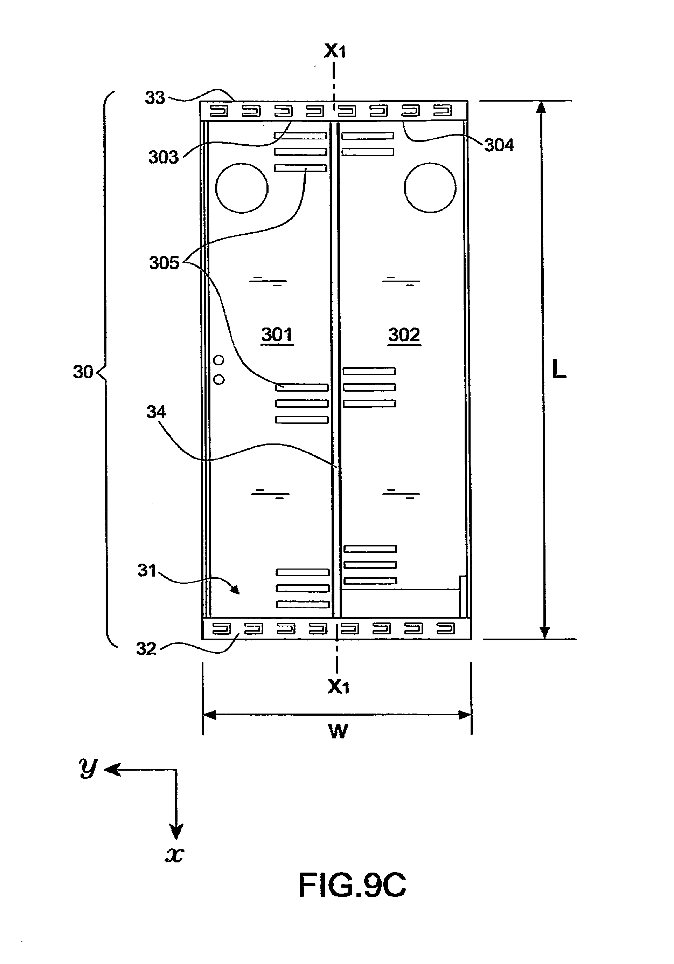

With reference to FIGS. 9A, 9B and 9C for a tower computer system 20 of the present invention, the tower computer system 20 comprises the following elements:

A tower chassis 30 is a U-shaped body composed of a bottom 31, a front rack 32, and a rear rack 33, and integrally formed or connected with each aforementioned component depending on needs, wherein the difference of the tower chassis 30 and a conventional tower chassis resides on that no frame is in the way on both left and right sides of the chassis to provide an opening form for installation, and the total height H of the tower chassis 30 is greater than the width W of the front side of the tower chassis 30 without exceeding 2.1 times of the width W, that is, 2.1 W≥H > W, and the length L does not exceed 2.5 times of the width W, so as to maintain the best position of the center of gravity of the tower case.

A mounting assembly 34 is installed at a middle section of the widthwise surface W of the tower chassis 30 and coupled to internal sides of the front rack 32 and rear rack 33, and the mounting assembly 34 includes a front connecting plate 341 and a rear connecting plate 342 protruding from the connecting plate 341 and a rear connecting plate 342 protruding from the internal sides of the front and rear racks 32, 33 respectively as shown in FIG. 9A, and a connecting board 34 coupled between the front and rear connecting plates 341, 342, but the invention is not limited to such arrangement only. In FIG. 9B, a single connecting board 34 can be fixed directly onto internal sides of the front and rear racks 32, 33 of the tower chassis 30. The connecting board used as the mounting assembly 34 can be fixed by soldiering, locking or latching, and the connecting board can be formed with hollow holes or other forms, such that a vertical Z-Z connecting board 34 can provide a predetermined longitudinally perpendicular X-Z position for fixing the board, and the connecting board 34 acting as the mounting assembly can be a longitudinal corresponding line X1 connected from the front rack 32 to the rear rack 33 as shown in FIG. 9C, such that the transverse Y-Y widthwise surface W of the tower chassis 30 can be separated into a first assembling chamber 301 with an opening aligned towards the left side and a second assembling chamber 302 with an opening aligned towards the right side.

A first electric connection access port 303 is installed at a position of the rear rack 33 in a vertical direction Z-Z and proximate to the mounting assembly 34 and situated in an area inside the first assembling chamber 301. The bottom 31 and rear rack 33 of the tower chassis 30 include a plurality of ventilation holes 305 formed at a middle section and preferably adjacent to connecting positions of the both sides of the mounting assembly 34.

The vertical connecting board used as the mounting assembly 34 as shown in FIG. 9B provides a position for fixing a motherboard 40 which is a component with the largest area in the system, and the rear end of the front of the motherboard 40 includes a vertical connecting port 45 disposed opposite to the first electric connection access port 303, such that the motherboard 40 can be installed in the first assembling chamber 301 in a longitudinally perpendicular direction X-Z. A front side of the motherboard 40 includes a first heat sink 41 equipped with a fan 42, and includes, but not limited thereto a first expanded component module 43 and second expanded component module 44.

The motherboard 40 further including a screw hole 47 or a positioning hole and fixed with a screw 48 or a positioning element into a corresponding locking hole 343 of the mounting assembly 34, such that the motherboard 40 can be installed in a direction perpendicular to the front and rear racks 32, 33, and erected from a middle section on the widthwise surface W of the tower chassis 30, wherein the middle section is not necessary to be the exact middle, but it is substantially the middle with a tolerance of several centimeters depending on needs. Of course, the present invention is not limited to the aforementioned positioning arrangement only.

In the aforementioned assembly of the present invention, a combination of the U-shaped tower chassis 30 and the mounting assembly 34 provides a convenient way for users to install the motherboard 40 perpendicularly and divide the tower chassis 30 into two back-to-back assembling chambers 301, 302 for reducing the length L and the height H of the chassis appropriately, while increasing the load carrying capacity of the case, improving the convenience of the installation and expansion upgrade, and separating wind fields to enhance the heat dissipation efficiency.

Devices and applications with the technical characteristics on the basis of the aforementioned tower chassis 30, mounting assembly 34 and first electric connection access port 303 of the present invention are described as follows.

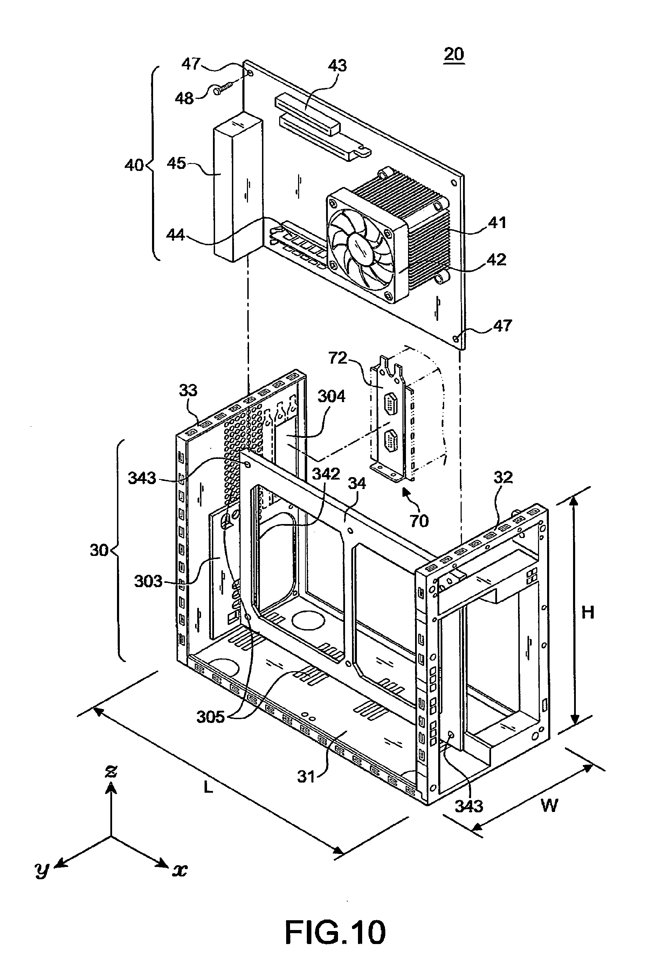

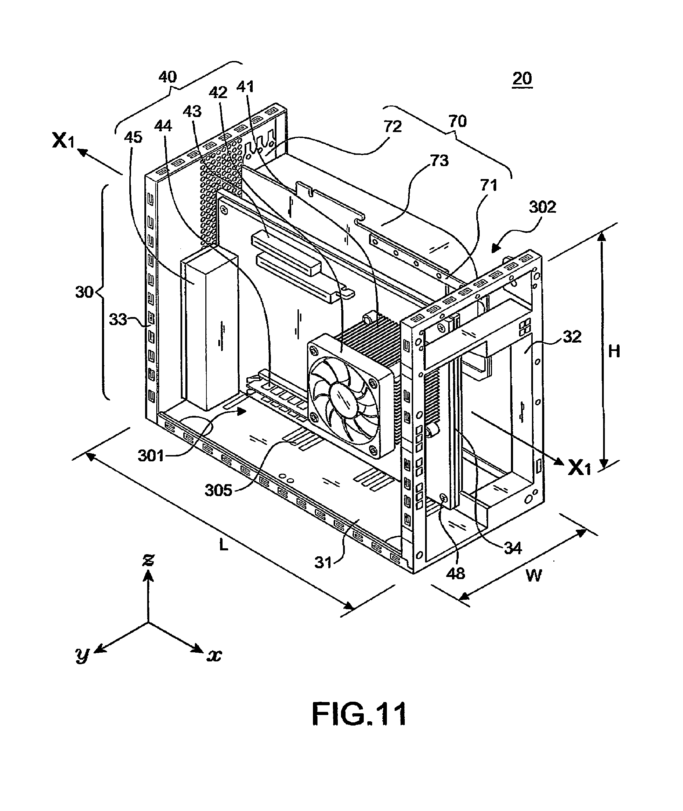

In FIGS. 10 to 12, the rear rack 33 of the tower chassis 30 includes a second electric connection access port 304 installed in a vertical direction Z-Z at a position of the rear rack 33 proximate to the mounting assembly 34 and situated in an area inside the second assembling chamber 302 and arranged in a vertical direction Z-Z adjacent to the first electric connection access port 303.

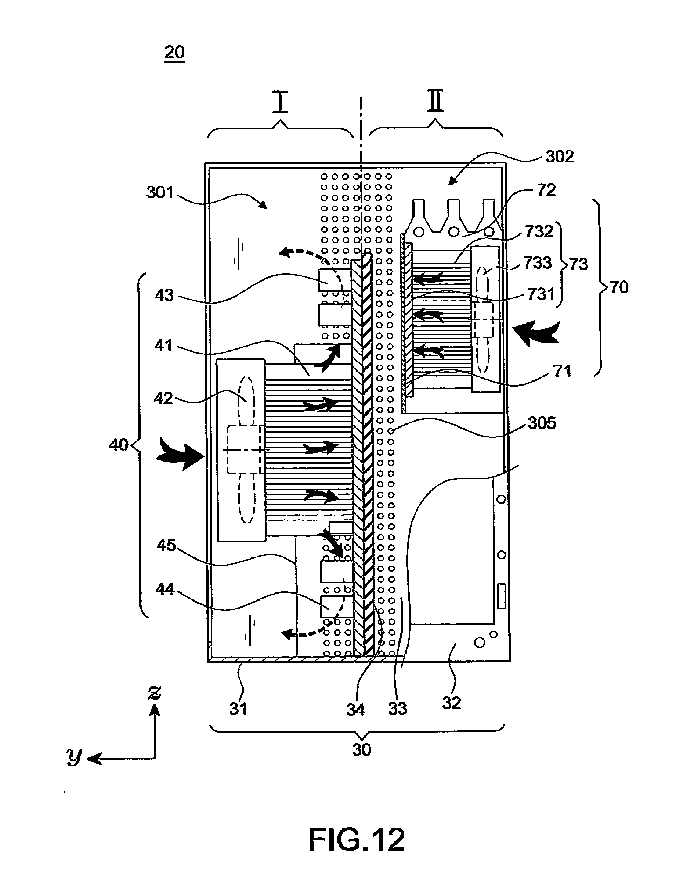

A support module 70 having an input/output (I/O) electric connecting port 72 is provided for installing a support frame 71 of an expanded electronic component such as a display adaptor or graphic card 73 and a rear rack 33, and can be installed at either one or both of the first and second assembling chambers 301, 302. In this preferred embodiment, the support module 70 is installed at an upper right position of the tower chassis 30 and erected in a parallel direction and adjacent to the motherboard 40 for installing the display adaptor or graphic card 73 sequentially in the erected direction as shown in FIG. 12, and the display adaptor or graphic card 73 includes a circuit board 731 installed onto an internal side and a heat sink 732 with a fan 733 is installed onto the circuit board 731. In this preferred embodiment, the fan 42 of the motherboard 40 and the fan 733 of the display adaptor or graphic card 73 are installed in an outward direction and respectively inside the first and second assembling chamber 301, 302, so as to separate the tower chassis 30 into left and right main wind fields I, II, since the fans 42, 733 are respectively near both sides of the tower chassis 30. As a result, external air sucked by the two different fans 42, 733 will blow directly at the heat sinks 42, 732 for the heat dissipation operation separately, and the circuit board 731 of the display adaptor or graphic card 73 is installed in parallel and adjacent to the motherboard 40 for effectively separating the wind fields I, II for separate operation, and the cold air sucked by each fan 42, 733 blows directly at the target and flows towards air holes formed on the casing and the tower chassis 30. The air flows through each component module installed in the first assembling chamber 301 or second assembling chamber 302 and discharges outside automatically or flow to the other assembly chamber, and the heat generated by each component in the chassis is dissipated naturally to achieve the overall heat dissipation effect.

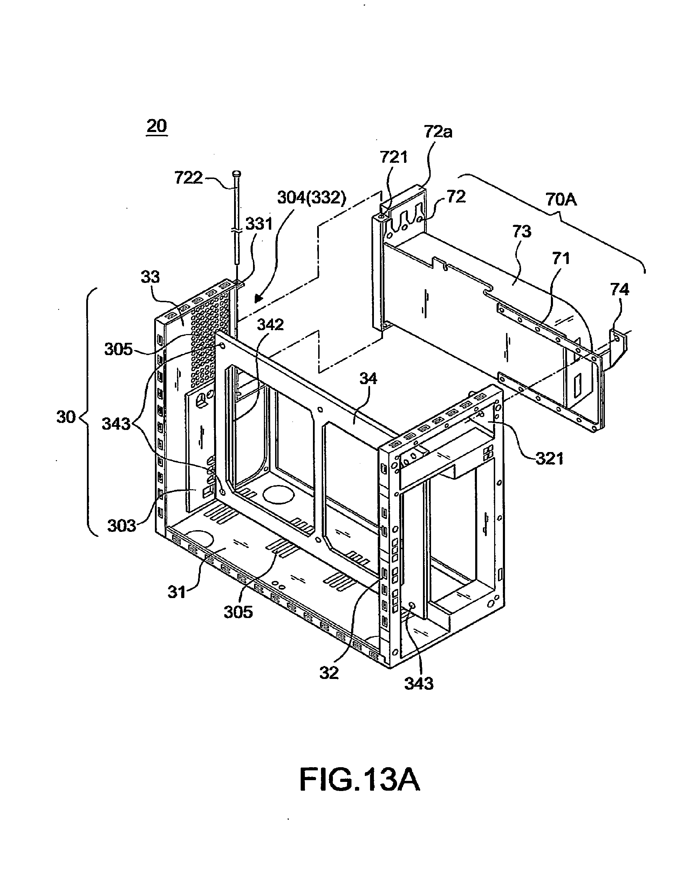

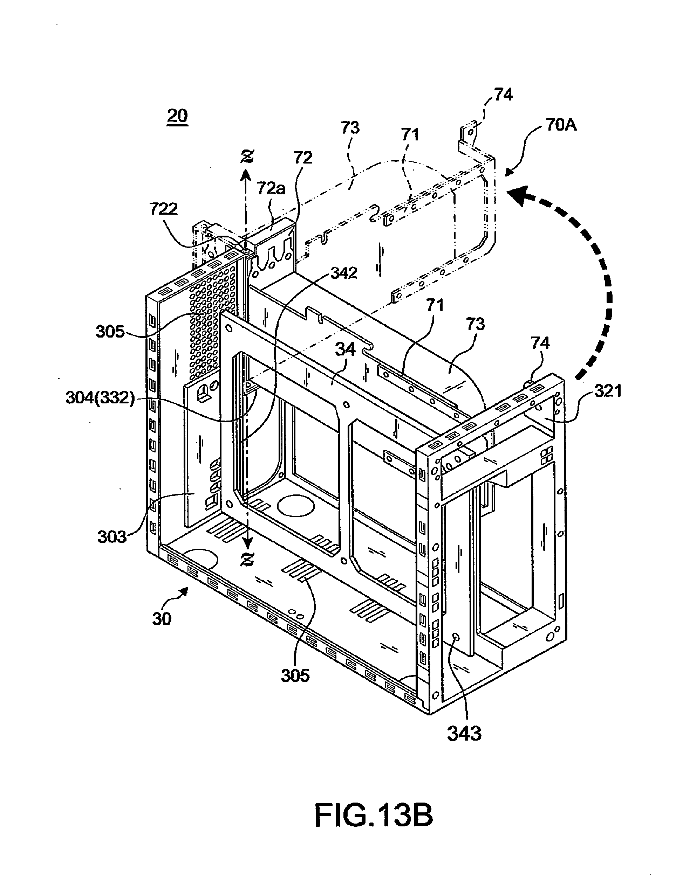

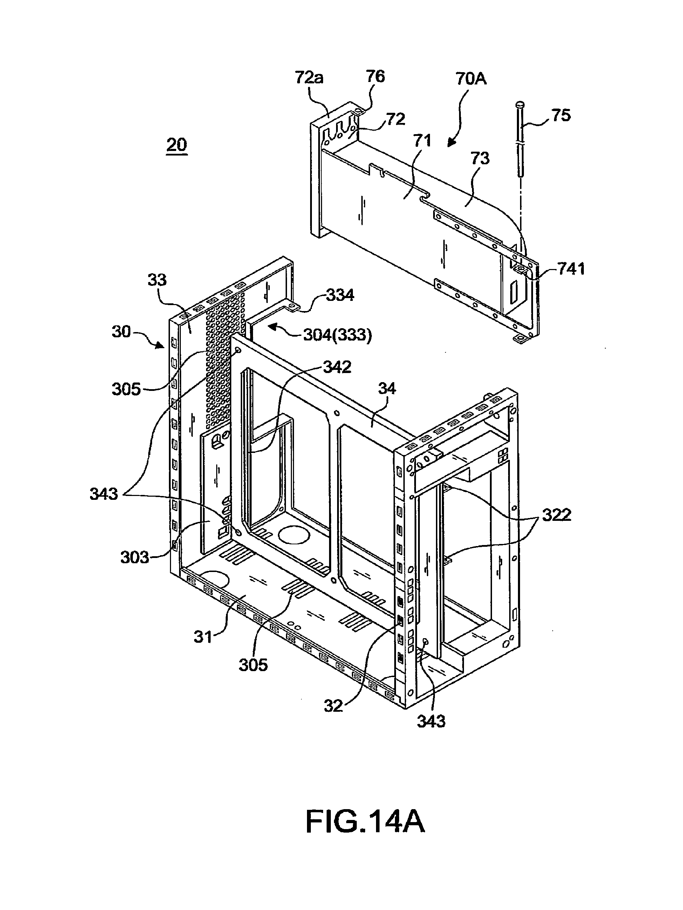

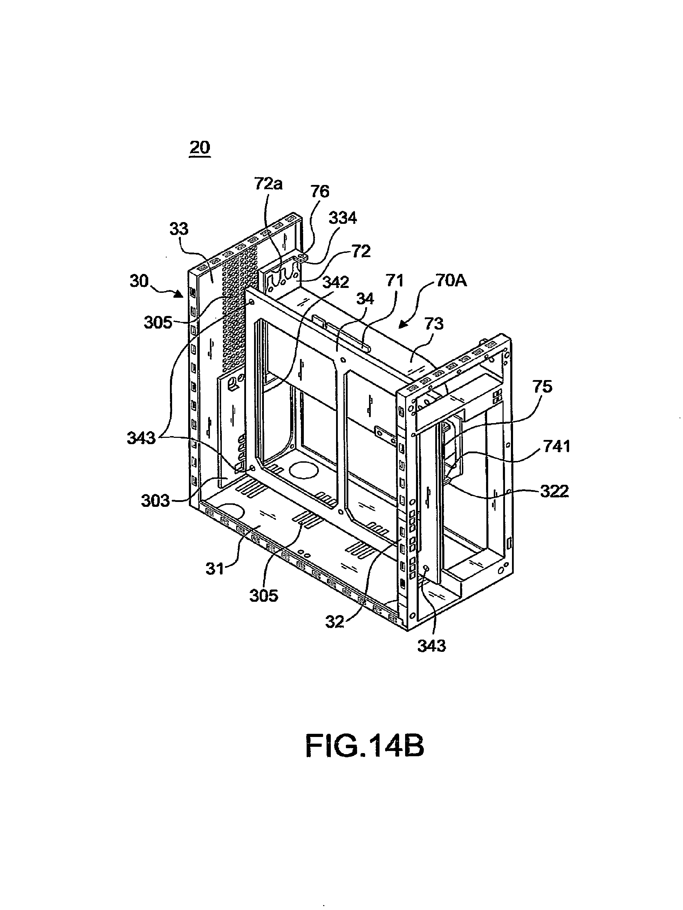

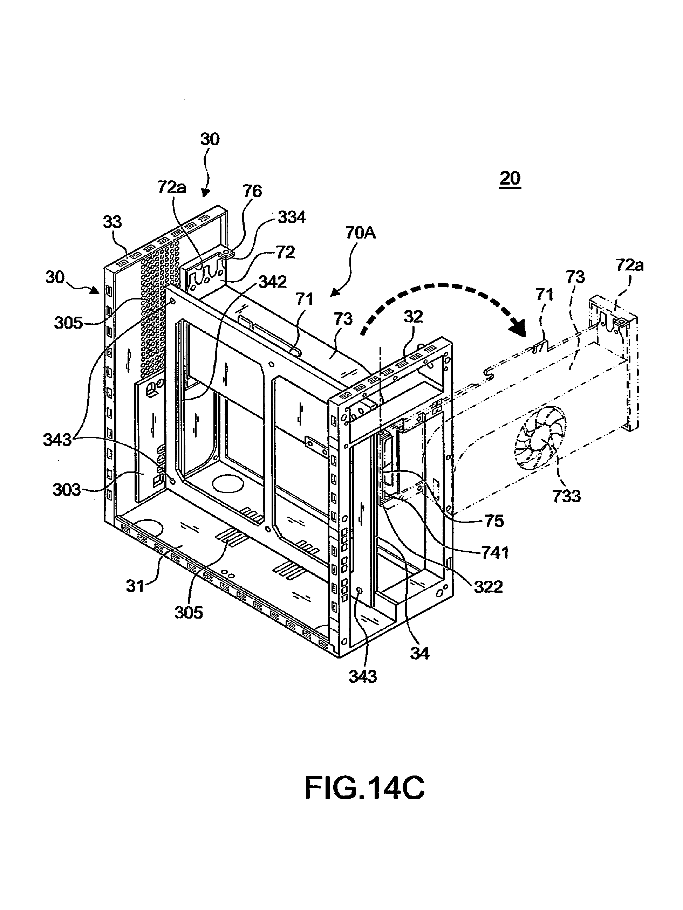

In a feasible embodiment of the present invention, the support module 70 can be a movable support frame module 70A as shown in FIGS. 13A and 13B, and the rear rack 33 includes a second electric connection access port 304 formed on the right side of the rear rack 33. In this embodiment, the second electric connection access port 304 is an L-shaped slot 332, but not be limited to such only. Alternatively, it can be a U-shaped slot 333 as shown in FIGS. 14A, 14B and 14C, which will be described later.

In FIGS. 13A and 13B, the second electric connection access port 304 is an L-shaped slot 332, and the movable support frame module 70A acts as the support module 70 for accommodating an expanded electronic component 73, whose rear side includes an input/output (I/O) electrical connecting portion 72. In this preferred embodiment, it can be an engage/disengage element 72a having a shape corresponsive to the L-shaped slot 332 of the rear rack 33, such that the movable support frame module 70A can be engaged or disengaged with the L-shaped slot 332 or lifted open laterally from the L-shaped slot 332 as shown in FIG. 13B.

In this preferred embodiment, the L-shaped slot 332 of the rear rack of the tower chassis includes a rear pivot base 331, and the movable support frame module 70A includes a rear pivot hole 721 formed at a rear end, and a first pivot 722 is pivotally installed onto the rear pivot base 331, such that the movable support frame module 70A can be engaged from the front to the back by using the rear pivot base 331 as an axis, and it can be engaged by locking the first flange plate 74 at the front side of the movable support frame module 70A to the first positioning plate 321 installed at a position opposite to the front rack 32.

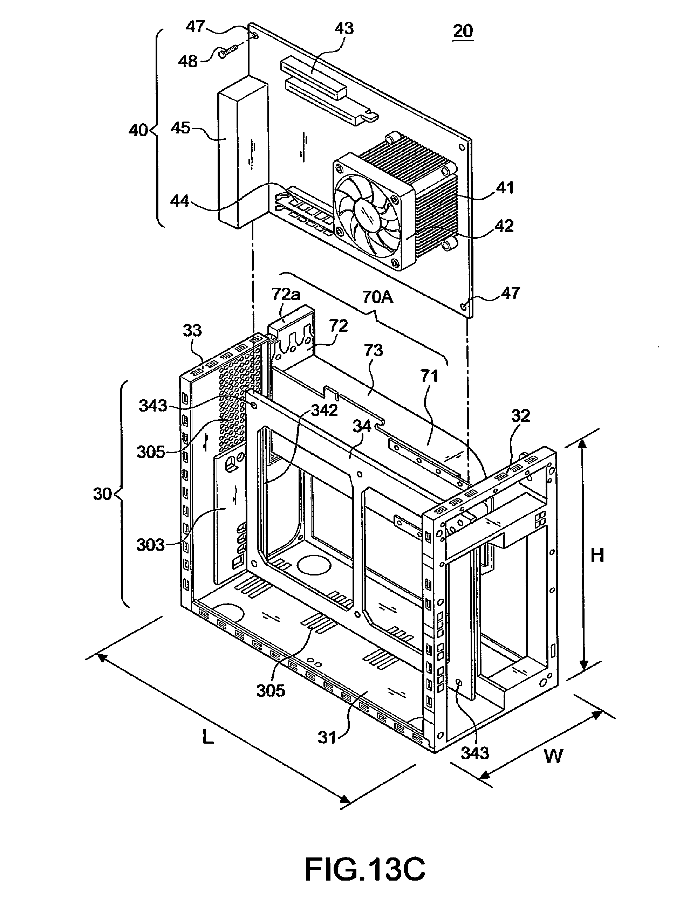

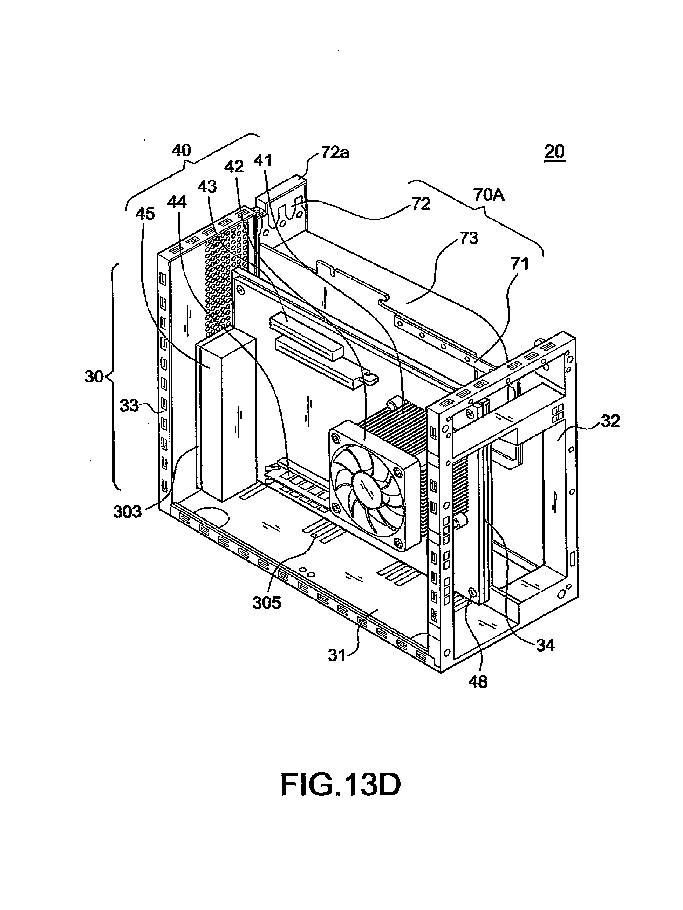

In this preferred embodiment, although the first pivot 722 can pivotally fix the rear side of the movable support frame module 70A to L-shaped slot 332, the present invention is not limited to such arrangement only. That is, the front rack 32 can be used as a pivoting center, and the rear side can be lifted open. FIGS. 13C and 13D show that the motherboard 40 is installed on the mounting assembly 34 and disposed parallel and adjacent to the movable support frame module 70A.

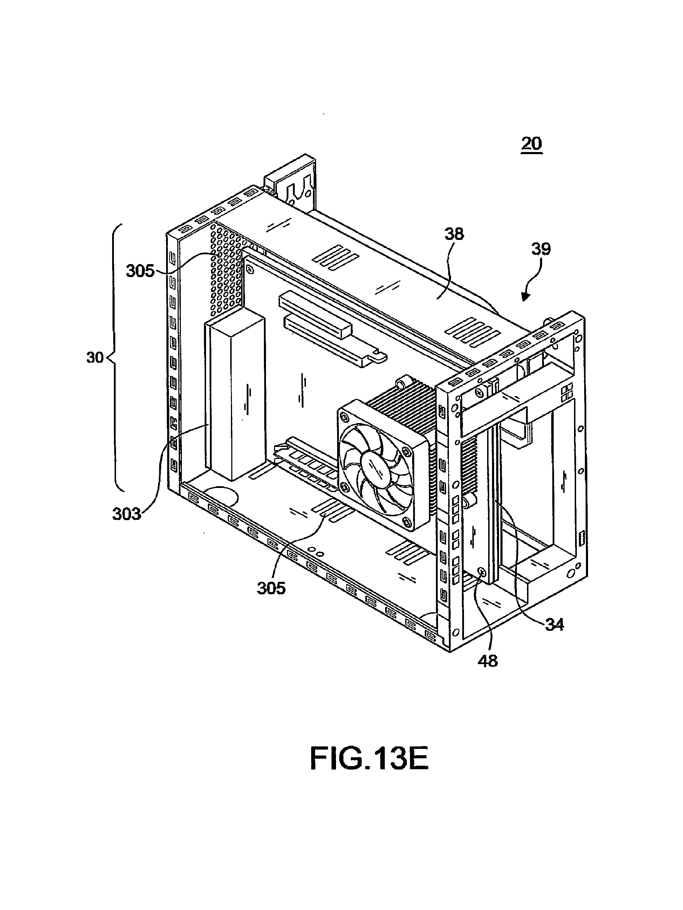

In FIG. 13E, a connecting element 38 is disposed at the top of the U-shaped body of the tower chassis 30 for providing a more secured frame structure 39. However, the connecting element 38 is not a must, and it can be installed when needed.

In FIGS. 14A, 14B and 14C, the second electric connection access port 304 of the present invention is a U-shaped slot 333. In this preferred embodiment, the front rack 32 of the tower chassis includes a front pivot base 322, and the movable support frame module 70A includes a front pivot hole 741 formed at a front end and provided for pivotally installing a second pivot 75 onto the front pivot base 322, such that the movable support frame module 70A can be lifted open from the rear to the front by using the front pivot base 322 as an axis. When the movable support frame module 70A is closed, the engage/disengage element 72a, which is the connecting port 72, disposed at a rear side of the movable support frame module 70A can be installed into the slot 333, and the second flange plate 76 of the connecting port 72 is secured to the second positioning plate 334 installed at a position opposite to the rear rack 33.

In this preferred embodiment, although the second pivot 75 can pivotally fix a front end of the movable support frame module 70A to the front rack 32 and the rear side can be closed onto the U-shaped slot 333, the invention should not be limited to such arrangement. The rear end of the movable support frame module 70A can be pivotally installed into the U-shaped slot 333, and the front end can be lifted open, but this is just a changeable way of the present invention, and thus will not be described in details.

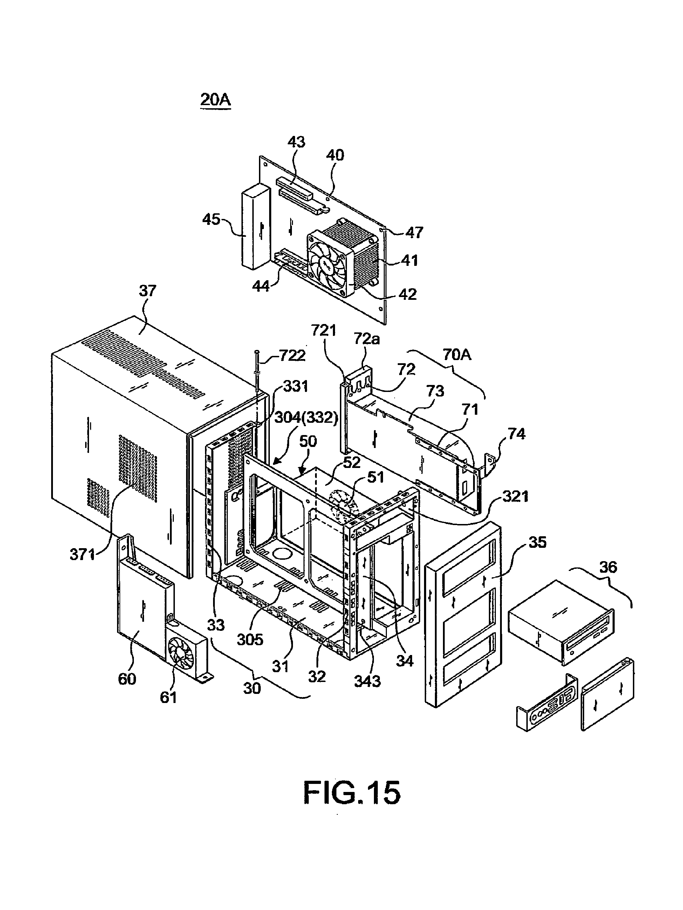

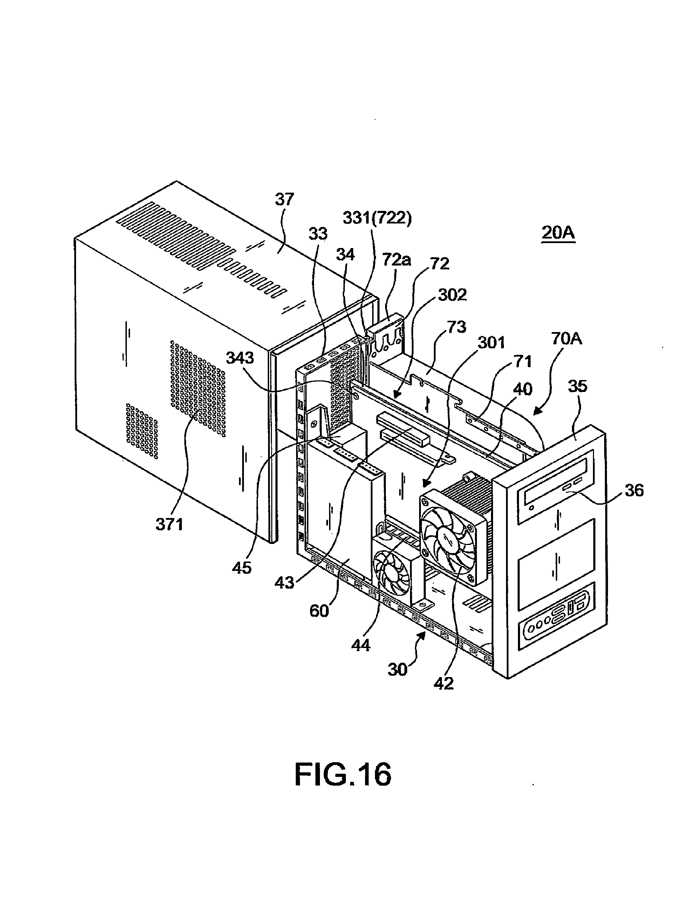

In FIGS. 15 and 16, the present invention includes, but not be limited thereto a casing 37 on a surface of the tower chassis 30, and a ventilation hole 371 installed at a position opposite to each fan. In this preferred embodiment, the casing 37 is a U-shaped body, but should not be limited thereto. It also can be a plurality of plates secured onto the sides of the tower chassis 30. installed in parallel to the motherboard 40 and proximate to a lateral side of the tower chassis 30. By the separation of the housing 52 with the motherboard 40 and other electronic components, and the design of the ventilation hole 305, the power supply device 50 or together with the movable support frame module 70A form a independent wind field to suck external air into the tower chassis 30 for an air convection and exchange in a heat dissipation operation.

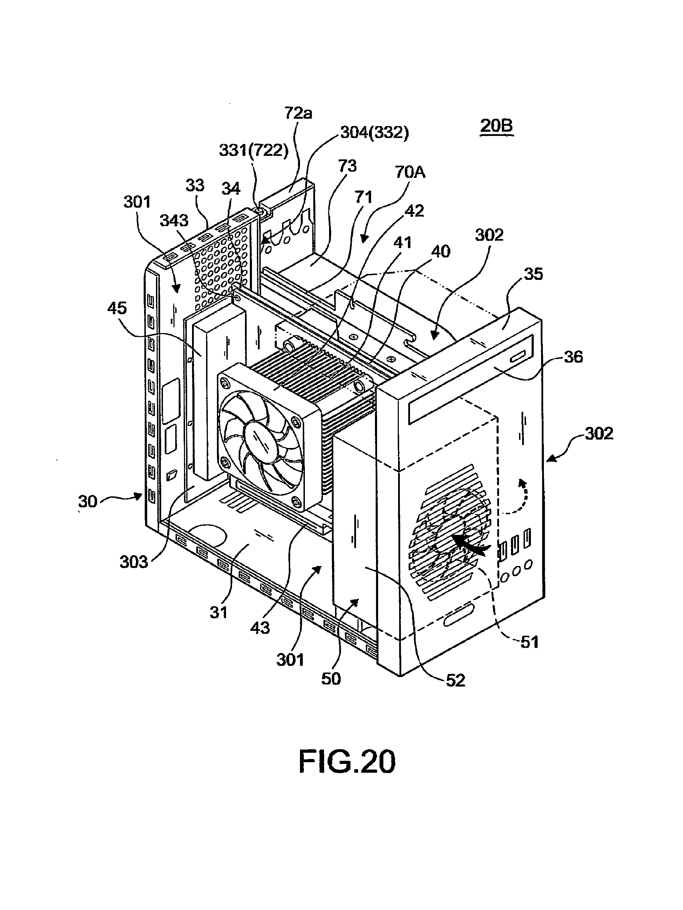

With reference to FIG. 20 for another preferred embodiment of the present invention, a power supply device 50 bundled with a housing 52 and a fan 51 is installed at a position in a direction opposite to the motherboard 40 and proximate to the front edge of the tower chassis 30. More specifically, the power supply device 50 is installed at a front end of the first assembling chamber 301 and second assembling chamber 302, such that the power supply device 50 becomes an independent wind field by using the partition of the housing 52 for sucking external air into the tower chassis 30 to perform air convection and exchange for a heat dissipation operation.

The technical characteristics and effects of the present invention will become apparent from the detailed description taken with the accompanying drawings as follows.

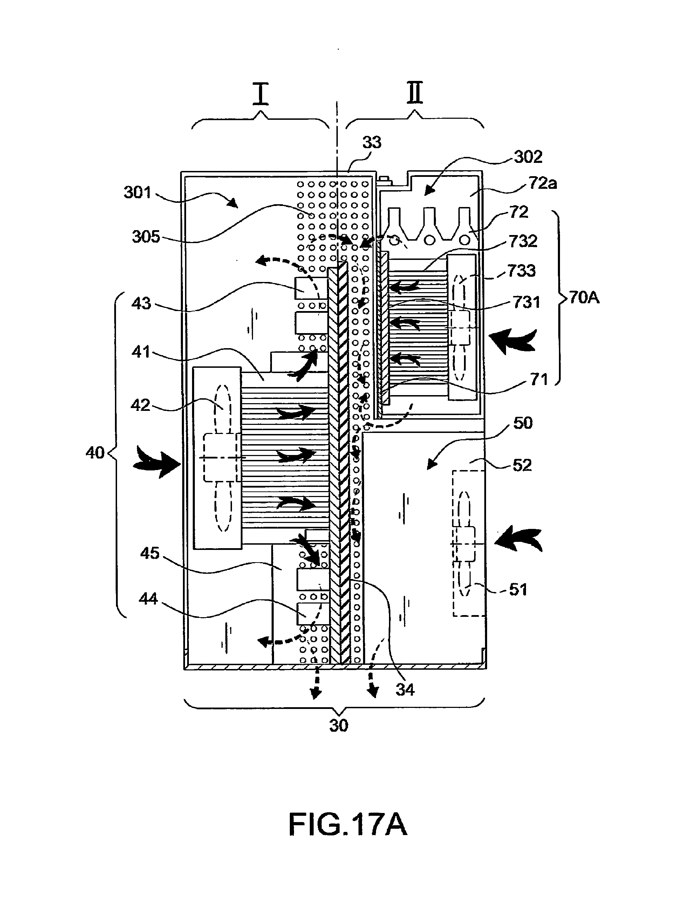

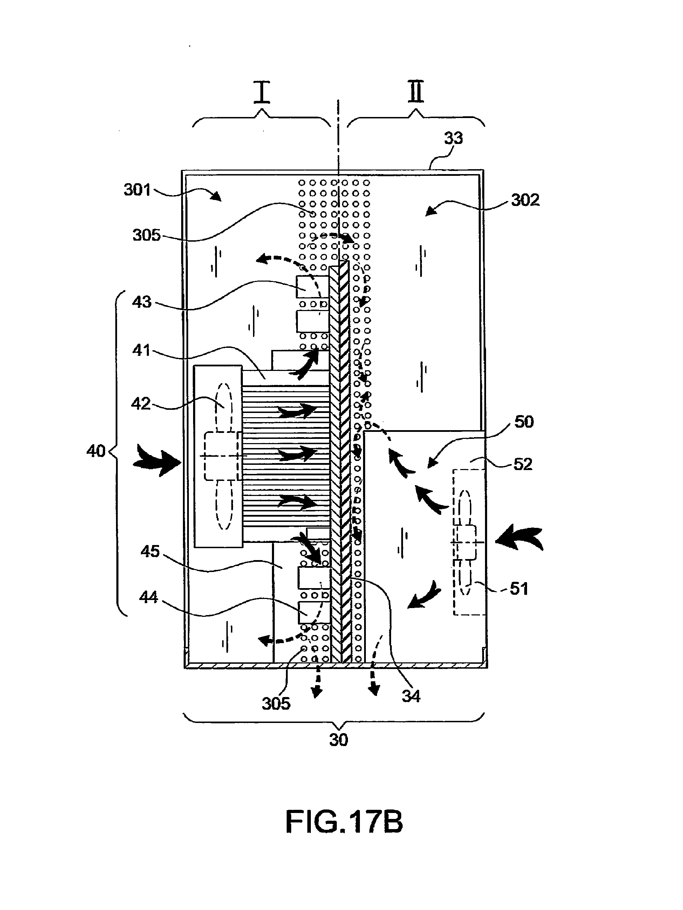

With reference to FIGS. 15 to 17A for schematic views of the present invention applied to a BTX tower computer system 20A, its structure is the same as that described above, and the same numerals are used for representing the respective elements. In this preferred embodiment, the motherboard 40 includes a motherboard used for a Pico-BTX desktop computer. The output power of the power supply device 50 is up to 550W, and one fan 51 is installed become apparent from the detailed description taken with the accompanying drawings as follows.

With reference to FIGS. 15 to 17A for schematic views of the present invention applied to a BTX tower computer system 20A, its structure is the same as that described above, and the same numerals are used for representing the respective elements. In this preferred embodiment, the motherboard 40 includes a motherboard used for a Pico-BTX desktop computer. The output power of the power supply device 50 is up to 550W, and one fan 51 is installed on one lateral side of the tower computer system at least.

The front rack 32 of the tower chassis 30 includes a front panel 35, and a first electronic component 36 such as a 3.5-inch optical disk drive, a hard disk or a front-panel output slot embedded into the front panel 35.

Further, the first assembling chamber 301 contains a second electronic component 60 such as a display card with a fan 61 as well as an external casing and a hard disk.

Further, the movable support frame module 70A installed in the second assembling chamber 302 and the display adaptor or graphic card 73 and installed on the support frame 71 such as an expansion card, a graphic card or any other devices attached with the fan are described in the foregoing preferred embodiments, and thus will not be described here again. The movable support frame module is installed next to a lateral side of the tower chassis, and with the housing for separating from the motherboard and other electronic components, the power supply device forms a wind field to suck external air directly into the tower chassis for the air mounted, and other components such as the casing 37 is installed to complete the assembly. Therefore, the present invention overcome the shortcomings of the prior art and achieve the effects of a good heat dissipation, a quick assembling or replacement, and a flexible expansion capacity. In addition, the present invention provides a better flexibility of its use, and more diversified system functions.

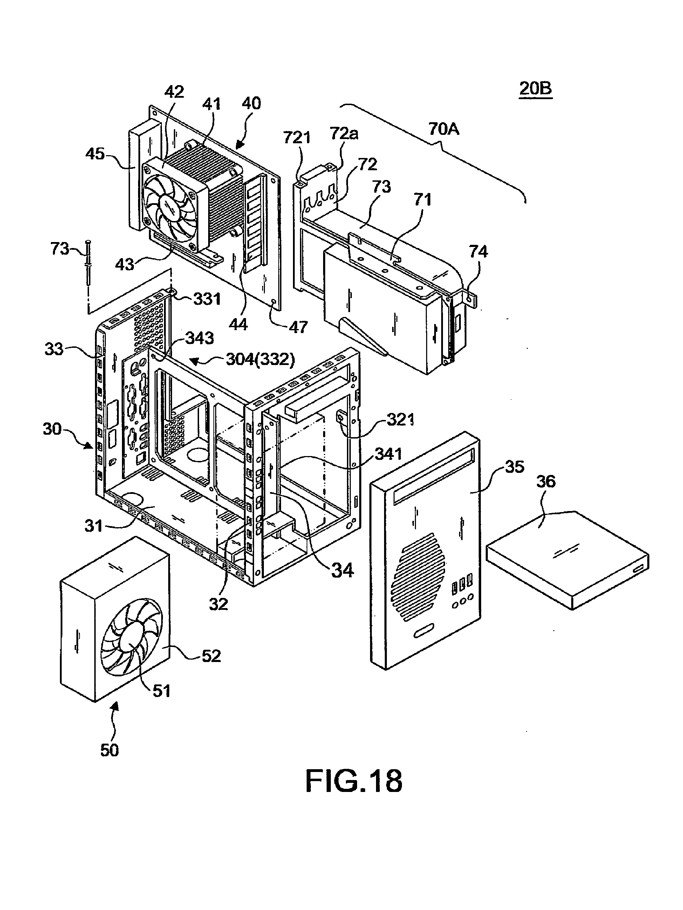

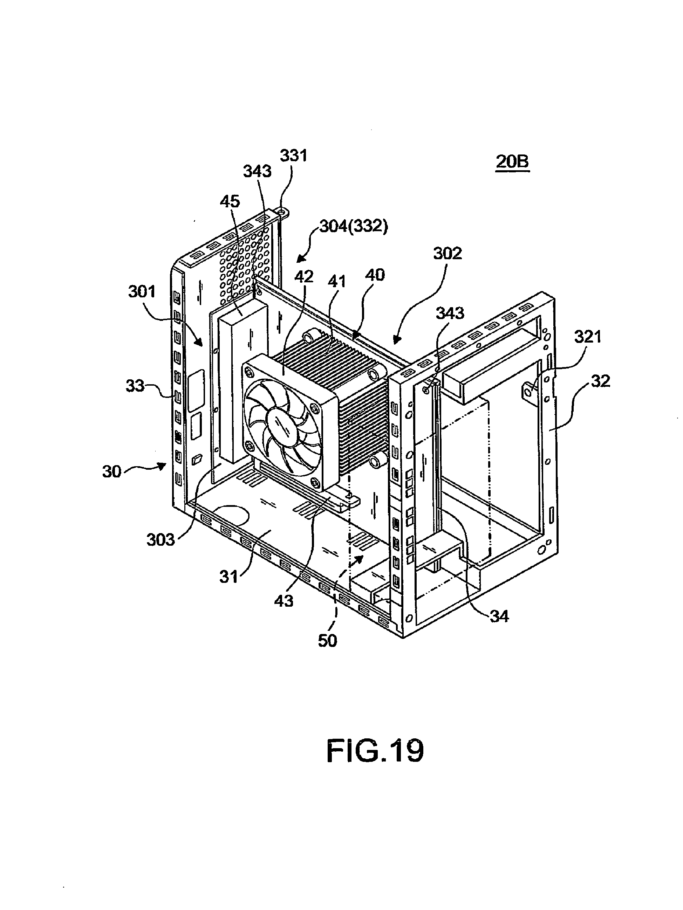

With reference to FIGS. 18 to 20 for schematic views of the present invention applied to a MINI-ITX desktop tower computer system 20B, the motherboard 40 includes an AOPEN MCP7VT-V motherboard, which is the same as those used in a small personal computer system, and the same numerals are used for representing respective elements, and the difference resides on that:
1. It is a compact system capable of installing the motherboard 40 onto the U-shaped tower chassis 30 directly.
2. To meet the development trend for the dimensions of the expansion devices, the power supply device 50 is installed in the back-to-back direction and at a position having an angle of 90 °with respect to the front end of the motherboard 40. Although the position is changed, after air is sucked from the front end, the air flows to the wind field of the assembling chamber, and thus the overall structure and effect are the same as those described above.

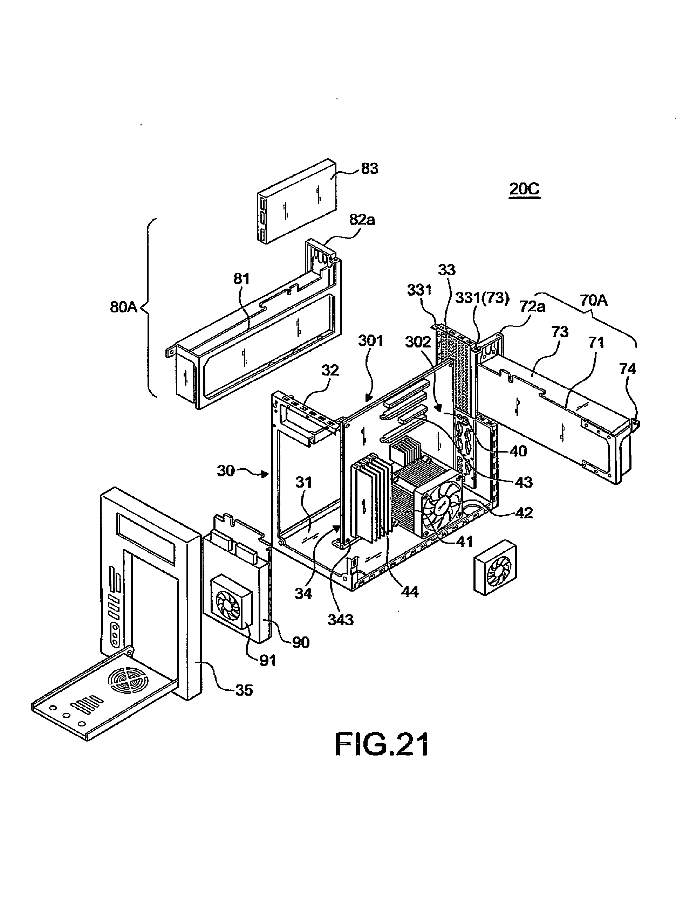

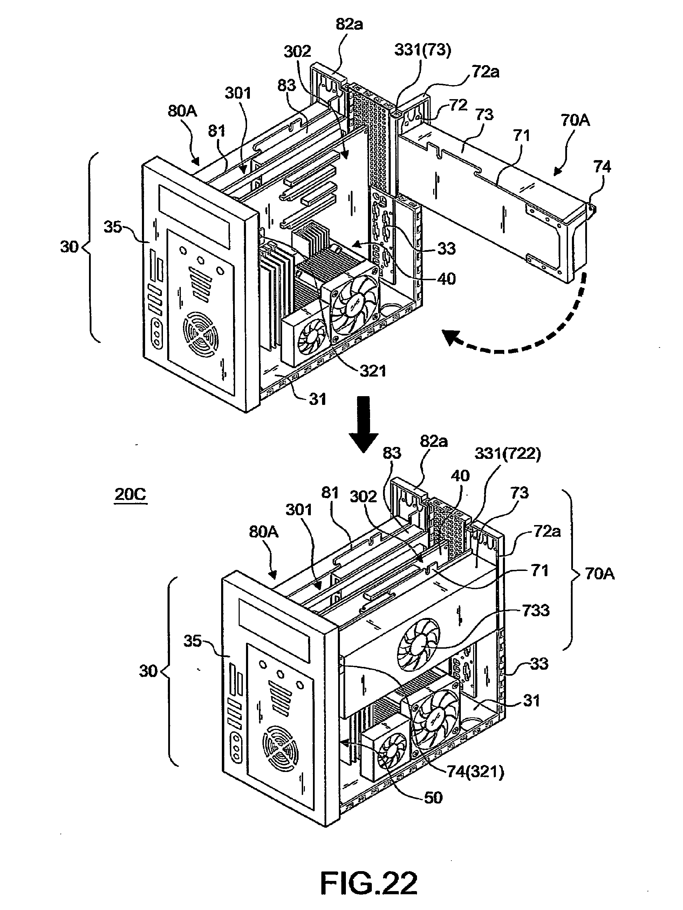

With reference to FIGS. 21 to 22 for schematic views of the present invention applied to a MINI-ATX tower computer system 20C, the motherboard 40 includes the ASUS MaximusIIJ GENE motherboard, and the difference from the aforementioned embodiments resides on that: a second assembling chamber 302 is disposed at the front side of the motherboard 40, and the front rack 32 includes a high-speed hard disk 90 equipped with a fan 91 to form an independent wind field. Further, the first assembling chamber 301 includes a movable support frame module 80A that can be opened laterally, and an expanded electronic component 73 installed on another movable support frame module 70A of the second assembling chamber 302, wherein the expanded electronic component 73 can be a hard disk or other expanded electronic components.

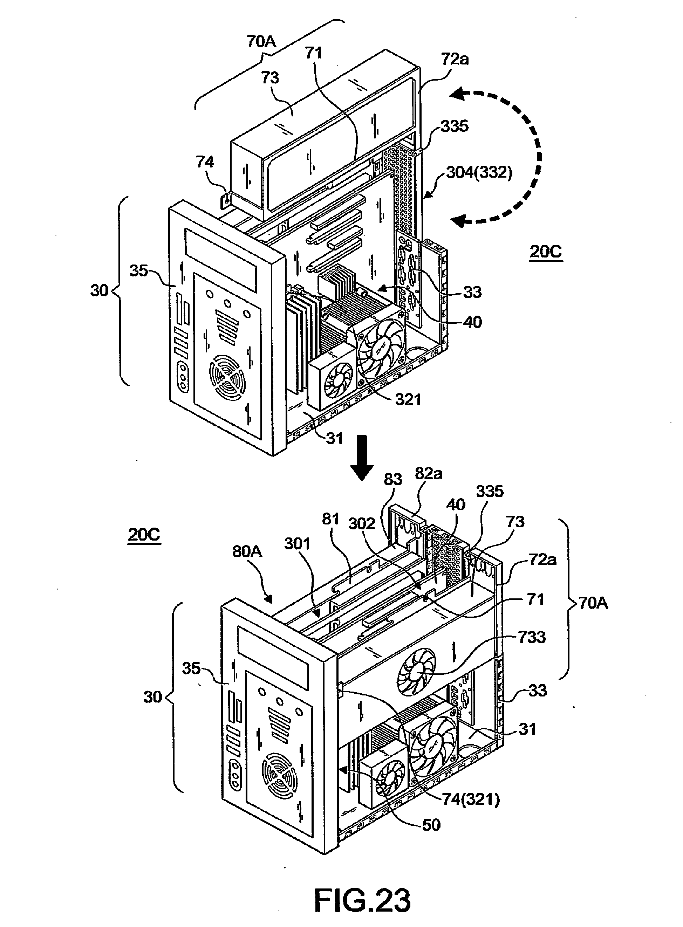

With reference to FIG. 23 for another preferred embodiment of the present invention applied to a MINI-ATX tower computer system 20C, the difference from the foregoing preferred embodiments resides on that a pivot base 335 is disposed axially on an internal upper side of the L-shaped slot 332, such that the engage/disengage element 72a of the movable support frame module can be lifted upwardly by using the pivot base 335 as an axis. When the movable support frame module is closed, a first flange plate 74 installed at the front side of the support module 70 is secured onto the first positioning plate 321 of the front rack.

Including a display card or a graphic card, the expanded electronic component can have a better heat dissipation effect with its fan 733 installed towards the external side sucking external air directly. Since the movable support frame module 70A or 80A of the present invention includes an I/O electric connecting port 72, 82 which is designed as an engage/disengage element 72a, 82a, such that when the rear rack 33 is lifted or open laterally, the expanded electronic component 73, 83 is electrically coupled to the I/O electric connecting port 72, 82, such that it can be operated smoothly in compliance with the characteristics and effects of the divided assembling chambers and wind fields. For the motherboard 40 or an electronic component such as a display card or an expansion card, a fan of its heat sink can be installed proximate to the edge of the chassis, such that external cold air can be sucked into the chassis and blown at a heat source of the chip for dissipating heat as well.

In the foregoing preferred embodiments, the present invention provides a tower chassis 30 with a motherboard 40 erected from the middle section, and a support module 70 installed in parallel and adjacent to the motherboard for the order assembly of expanded electronic components to form the left and right assembling chambers 301, 302 and their independent wind fields, so that the invention can achieve the effects of improving the heat dissipation efficiency, reducing the size of the chassis for a convenient assembling or disassembling process, and facilitating an upgrade expansion and a change of the application nature of the system.

## Claims

1. A tower computer system, comprising:
a tower chassis (30), being a U-shape body composed of a bottom (31), a front rack (32) and a rear rack (33);
a mounting assembly composed of a vertical board (34), installed at the middle section of the tower chassis (30), and coupled between the front rack (32) and rear rack (33) with a motherboard (40) mounted on the vertical connecting board (34), such that the U-shaped tower chassis (30) is separated into a first assembling chamber (301) with an opening aligned towards the left side and a second assembling chamber (302) with an opening aligned towards the right side;
a first electric connection access port (303), disposed in the vertical direction on the rear rack (33) and at a position proximate to the vertical connecting board (34), and situated in an area inside the first assembling chamber (301);
a second electric connection access port (304) disposed in the vertical direction on the rear rack (33) and at a position proximate to the vertical connecting board (34), situated in an area inside the second assembling chamber (302), and being parallel to the vertical connecting board (34) and the first electric connection access port (303);
a front panel (35) disposed on the front rack (32) of the tower chassis (30) and having a first electronic component (36) composed of a disk drive or a hard disk; and
a U-shaped cover (37) for the tower chassis (30), the cover having ventilation holes (371),
wherein the motherboard (40) includes a connecting port (45) erected from the rear of the front side and opposite to the first electric connection port (303), such that the motherboard (40) is installed in a longitudinally perpendicular direction in the first assembling chamber (301), and the motherboard (40) includes a first heat sink (41) with a fan (42) installed at the front side of the motherboard (40),
**characterized in that**:
the second electric connection port (304) includes a support module (70) coupled with the second electric connection access port (304), and the support module (70) includes a support frame (71) for supporting a display adapter or graphic card (73), and the support frame (71) includes an I/O electric connecting port (72) disposed on the rear side of the support frame (71) and opposite to the second electric connection access port (304) and coupled to the second electric connection access port (304), such that the support module (70) is disposed in the second assembling chamber (302) and arranged parallelly back to back with the motherboard (40) and adjacent to each other, and the display adapter or graphic card (73) includes a circuit board (731) and a second heat sink (732) with a fan (733) installed on the front side of the circuit board (731), such that the second heat sink (732) is back to back with the first heat sink (41) on the front side of motherboard (40), and both first and second heat sinks (41),(732) are proximate to the lateral sides of the tower chassis (30), so that the fans (42),(733) of the first and second heat sinks (41),(732) suck external air from both sides and blows the air at the first and second heat sinks (41), (732).

2. The tower computer system as recited in claim 1, wherein the vertical connecting board (34) comprises a front connecting plate (341) and a rear connecting plate (342) protruding from internal sides of the front and rear racks (32), (33) of the tower chassis (30) respectively, and a connecting board (34) coupled between the front and rear connecting plates (341), (342).

3. The tower computer system as recited in claim 1, wherein the bottom (31) and rear rack (33) of the tower chassis (30) include plurality of ventilation holes (305) formed at a middle section.

4. The tower computer system as recited in claim 1, wherein the support module (70) includes a movable support frame module (70A) that can be opened and closed, and a rear side of the movable support frame module (70A) is provided for installing an engage/disengage element (72a) of the I/O electric connecting port (72), and coupled to the engage/disengage element (72a) for installing a support frame (71) of the display adaptor or graphic card (73), and the second electric connection access port (304) is a L-shaped or U-shaped slot (332),(333) matched with the shape of the movable support frame module (70A), and either one side or both sides of the rear rack (33) are provided for installing one or two movable support frame modules (70A), such that when the slot is closed, the movable support frame module (70A) is situated between the front and rear racks (32),(33) and provided for installing the display adaptor or graphic card (73) on the movable support frame module (70A).

5. The tower computer system as recited in claim 4, wherein the slot (332) of the rear rack (33) includes a rear pivot base (331), and the engage/disengage element (72a) of the movable support frame module (70A) includes a rear pivot hole (721) formed thereon, so that a first pivot (722) can be pivotally installed onto the rear pivot base (331), and the movable support frame module (70A) can be lifted open from the front to the back by using the rear pivot base (331) as an axis, and when the movable support frame module (70A) is closed, a first flange plate (74) installed on a front side of the support frame (71) is secured to the first positioning plate (321) installed at a position opposite to the front rack (32).

6. The tower computer system as recited in claim 5, wherein the front rack (32) of the tower chassis (30) includes a front pivot base (322), and the movable support frame module (70A) includes a front pivot hole (741) formed at a front end of the support frame (71), and a second pivot (75) is pivotally installed onto the front pivot base (322), such that the movable support frame module (70A) can be lifted opened from the slot (333) to the front side by using the front pivot base (322) as an axis, and when the movable support frame module (70A) is closed, the engage/disengage element (72a) of the movable support frame module (70A) is installed into the slot (333), and a second flange plate (76) installed on the engage/disengage element (72a) is provided for securing second positioning plate (334) installed at a position opposite to the rear rack (33).

7. The tower computer system as recited in claim 5, wherein the slot of the rear rack (33) is an L-shaped slot (332), and the L-shaped slot (332) includes a pivot base (335) axially disposed on an internal upper side of the L-shaped slot (332), such that the engage/disengage element (72a) of the movable support frame module (70A) can be lifted from the bottom to the top by using the pivot base (335) as an axis, and when the movable support frame module (70A) is closed, the engage/disengage element (72a) of the movable support frame module (70A) is installed into the slot (332), and a first flange plate (74) installed on the front of the support frame (71) is provided for securing first positioning plate (321) installed at a position opposite to the front rack (32).

8. The tower computer system as recited in claim 1, wherein the second assembling chamber (302) on the backside of the motherboard (40) includes a power supply device (50) equipped with a housing (52) and a fan (51), and the power supply device (50) is installed parallel and adjacent to the motherboard (40) and proximate to a lateral side of the tower chassis (30), such that by the separation of the housing (52) with the motherboard (40) and other electronic components, the power supply device (50) constitutes an independent wind field for sucking external air into the tower chassis (30) to perform air convection and exchange in a heat dissipation operation.

9. The tower computer system as recited in claim 1, further comprising a power supply device (50) equipped with a housing (52) and a fan (51) and installed in a back-to-back direction of the motherboard (40) and at a position at the front edge of the tower chassis (30), and the power supply device (50) is installed at a front end of the first assembling chamber (301) and second assembling chamber (302), such that the power supply device (50) can be divided by the housing (52) into an independent wind field, and external air is sucked into the tower chassis (30) directly for performing air convection and exchange in a heat dissipation operation.

10. The tower computer system as recited in claim 1, wherein the front rack (32) of the tower chassis (30) includes a front panel (35) and a first electronic component (36) embedded into the front panel (35), and the first assembling chamber (301) contains a second electronic component (60).

11. The tower computer system as recited in claim 1, wherein the U-shaped body of the tower chassis (30) further includes a connecting element (38) installed thereon to form a frame structure (39).

## Patentansprüche

1. Computersystem mit Tower-Gehäuse, umfassend:
ein Tower-Gehäuse (30), das ein U-förmiger Körper ist, der aus einem Unterteil (31), einem vorderen Träger (32) und einem hinteren Träger (33) gebildet ist;
eine Montageanordnung, die aus einer senkrechten Platte (34) gebildet ist, die im mittleren Bereich des Tower-Gehäuses (30) eingebaut und zwischen dem vorderen Träger (32) und hinteren Träger (33) befestigt ist, wobei eine Hauptplatine (40) an der senkrechten Verbindungsplatte (34) montiert ist, sodass das U-förmige Tower-Gehäuse (30) in eine erste Montagekammer (301) mit einer nach der linken Seite ausgerichteten Öffnung und eine zweite Montagekammer (302) mit einer nach der rechten Seite ausgerichteten Öffnung aufgeteilt ist;
einen ersten Stromanschluss-Zugangsport (303), der in der senkrechten Richtung an dem hinteren Träger (33) und an einer Stelle nahe der senkrechten Verbindungsplatte (34) angeordnet ist und in einem Bereich innerhalb der ersten Montagekammer (301) befindlich ist;
einen zweiten Stromanschluss-Zugangsport (304), der in der senkrechten Richtung an dem hinteren Träger (33) und an einer Stelle nahe der senkrechten Verbindungsplatte (34) angeordnet ist, in einem Bereich innerhalb der zweiten Montagekammer (302) befindlich ist und parallel zur senkrechten Verbindungsplatte (34) und dem ersten Stromanschluss-Zugangsport (303) verläuft;
eine Frontblende (35), die an dem vorderen Träger (32) des Tower-Gehäuses (30) angeordnet ist und ein erstes elektronisches Bauteil (36) aufweist, das aus einem Plattenlaufwerk oder einer Festplatte gebildet ist; und
eine U-förmige Abdeckung (37) für das Tower-Gehäuse (30), wobei die Abdeckung Lüftungslöcher (371) aufweist,
wobei die Hauptplatine (40) einen Anschlussport (45) aufweist, der sich von der Hinterseite der Vorderseite aus und gegenüber dem ersten Stromanschlussport (303) erhebt, sodass die Hauptplatine (40) in einer senkrechten Längsrichtung in der ersten Montagekammer (301) eingebaut ist, und die Hauptplatine (40) einen ersten Kühlkörper (41) mit einem Lüfter (42) aufweist, der an der Vorderseite der Hauptplatine (40) angebracht ist,
**dadurch gekennzeichnet, dass**:
der zweite Stromanschlussport (304) ein Trägermodul (70) aufweist, das mit dem zweiten Stromanschluss-Zugangsport (304) gekoppelt ist, und das Trägermodul (70) einen Trägerrahmen (71) zum Halten eines Bildschirmadapters oder einer Grafikkarte (73) aufweist, und der Trägerrahmen (71) einen E/A-Stromanschlussport (72) aufweist, der an der Hinterseite des Trägerrahmens (71) und gegenüber dem zweiten Stromanschluss-Zugangsport (304) angeordnet und mit dem zweiten Stromanschluss-Zugangsport (304) gekoppelt ist, sodass das Trägermodul (70) in der zweiten Montagekammer (302) angeordnet und parallel Rücken an Rücken mit der Hauptplatine (40) und benachbart zueinander angeordnet ist, und der Bildschirmadapter oder die Grafikkarte (73) eine Leiterplatte (731) und einen zweiten Kühlkörper (732) mit einem Lüfter (733) aufweist, der an der Vorderseite der Leiterplatte (731) angebracht ist, sodass der zweite Kühlkörper (732) Rücken an Rücken mit dem ersten Kühlkörper (41) an der Vorderseite der Hauptplatine (40) liegt, und sich sowohl der erste als auch der zweite Kühlkörper (41), (732) in der Nähe der Seitenflächen des Tower-Gehäuses (30) befinden, sodass die Lüfter (42), (733) des ersten und zweiten Kühlkörpers (41), (732) Außenluft von beiden Seiten ansaugen und die Luft auf den ersten und zweiten Kühlkörper (41), (732) blasen.

2. Computersystem mit Tower-Gehäuse nach Anspruch 1, wobei die senkrechte Verbindungsplatte (34) eine vordere Verbindungsplatte (341) und eine hintere Verbindungsplatte (342) umfasst, die von Innenseiten des vorderen beziehungsweise hinteren Trägers (32), (33) des Tower-Gehäuses (30) vorragen, und eine Verbindungsplatte (34) zwischen der vorderen und hinteren Verbindungsplatte (341), (342) befestigt ist.

3. Computersystem mit Tower-Gehäuse nach Anspruch 1, wobei das Unterteil (31) und der hintere Träger (33) des Tower-Gehäuses (30) eine Vielzahl von Lüftungslöchern (305) aufweisen, die in einem mittleren Abschnitt geformt sind.

4. Computersystem mit Tower-Gehäuse nach Anspruch 1, wobei das Trägermodul (70) ein bewegliches Trägerrahmenmodul (70A) aufweist, das geöffnet und geschlossen werden kann, und eine Rückseite des beweglichen Trägerrahmenmoduls (70A) zum Anbringen eines Einrück-/Ausrückelements (72a) des E/A-Stromanschlussports (72) vorgesehen ist, und mit dem Einrück-/Ausrückelement (72a) zum Anbringen eines Trägerrahmens (71) des Bildschirmadapters oder der Grafikkarte (73) verbunden, und der zweite Stromanschluss-Zugangsport (304) ein L-förmiger oder U-förmiger Schlitz (332), (333) ist, der an die Form des beweglichen Trägerrahmenmoduls (70A) angepasst ist, und entweder eine Seite oder beide Seiten des hinteren Trägers (33) zum Anbringen von einem oder zwei beweglichen Trägerrahmenmodulen (70A) vorgesehen ist bzw. sind, sodass wenn der Schlitz geschlossen ist, das bewegliche Trägerrahmenmodul (70A) zwischen dem vorderen und hinteren Träger (32), (33) befindlich ist und zum Anbringen des Bildschirmadapters oder der Grafikkarte (73) an dem beweglichen Trägerrahmenmodul (70A) vorgesehen ist.

5. Computersystem mit Tower-Gehäuse nach Anspruch 4, wobei der Schlitz (332) des hinteren Trägers (33) einen hinteren Stiftsitz (331) aufweist, und das Einrück-/Ausrückelement (72a) des beweglichen Trägerrahmenmoduls (70A) eine daran gebildete hintere Stiftbohrung (721) aufweist, sodass ein erster Stift (722) drehbar auf dem hinteren Stiftsitz (331) angebracht werden kann, und das bewegliche Trägerrahmenmodul (70A) von vorn nach hinten unter Verwendung des hinteren Stiftsitzes (331) als Achse durch Anheben geöffnet werden kann, und wenn das bewegliche Trägerrahmenmodul (70A) geschlossen ist, eine erste Flanschplatte (74), die an einer Vorderseite des Trägerrahmens (71) angebracht ist, an der ersten Positionierplatte (321) befestigt ist, die an einer Stelle gegenüber dem vorderen Träger (32) angebracht ist.

6. Computersystem mit Tower-Gehäuse nach Anspruch 5, wobei der vordere Träger (32) des Tower-Gehäuses (30) einen vorderen Stiftsitz (322) aufweist und das bewegliche Trägerrahmenmodul (70A) eine vordere Stiftbohrung (741) aufweist, die an einem vorderen Ende des Trägerrahmens (71) gebildet ist, und ein zweiter Stift (75) drehbar an dem vorderen Stiftsitz (322) angebracht ist, sodass das bewegliche Trägerrahmenmodul (70A) aus dem Schlitz (333) zur Vorderseite unter Verwendung des vorderen Stiftsitzes (322) als Achse durch Anheben geöffnet werden kann, und wenn das bewegliche Trägerrahmenmodul (70A) geschlossen ist, das Einrück-/Ausrückelement (72a) des beweglichen Trägerrahmenmoduls (70A) in dem Schlitz (333) untergebracht ist, und eine zweite Flanschplatte (76), die an dem Einrück-/Ausrückelement (72a) angebracht ist, zum Sichern der zweiten Positionierplatte (334) vorgesehen ist, die an einer Stelle gegenüber dem hinteren Träger (33) angebracht ist.

7. Computersystem mit Tower-Gehäuse nach Anspruch 5, wobei der Schlitz des hinteren Trägers (33) ein L-förmiger Schlitz (332) ist und der L-förmige Schlitz (332) einen Stiftsitz (335) aufweist, der axial an einer inneren Oberseite des L-förmigen Schlitzes (332) angeordnet ist, sodass das Einrück-/Ausrückelement (72a) des beweglichen Trägerrahmenmoduls (70A) von unten nach oben unter Verwendung des Stiftsitzes (335) als Achse angehoben werden kann, und wenn das bewegliche Trägerrahmenmodul (70A) geschlossen ist, das Einrück-/Ausrückelement (72a) des beweglichen Trägerrahmenmoduls (70A) in dem Schlitz (333) untergebracht ist, und eine erste Flanschplatte (74), die vorn an dem Trägerrahmen (71) angebracht ist, zum Sichern der ersten Positionierplatte (321) vorgesehen ist, die an einer Stelle gegenüber dem hinteren Träger (33) angebracht ist.

8. Computersystem mit Tower-Gehäuse nach Anspruch 1, wobei die zweite Montagekammer (302) an der Rückseite der Hauptplatine (40) eine Stromversorgungseinrichtung (50) aufweist, die mit einem Gehäuse (52) und einem Lüfter (51) ausgestattet ist, und die Stromversorgungseinrichtung (50) parallel zu der und angrenzend an die Hauptplatine (40) und nahe einer Seitenfläche des Tower-Gehäuses (30) eingebaut ist, sodass durch die Trennung des Gehäuses (52) mit der Hauptplatine (40) und anderen elektronischen Bauteilen die Stromversorgungseinrichtung (50) ein unabhängiges Luftfeld zum Ansaugen von Außenluft in das Tower-Gehäuse (30) zum Ausführen von Luftkonvektion und -austausch in einem Wärmeableitvorgang darstellt.

9. Computersystem mit Tower-Gehäuse nach Anspruch 1, ferner umfassend eine Stromversorgungseinrichtung (50), die mit einem Gehäuse (52) und einem Lüfter (51) ausgestattet ist und in einer Rücken-zu-Rücken-Richtung der Hauptplatine (40) und an einer Stelle an der Vorderkante des Tower-Gehäuses (30) eingebaut ist, und die Stromversorgungseinrichtung (50) ist an einem vorderen Ende der ersten Montagekammer (301) und zweiten Montagekammer (302) eingebaut, sodass die Stromversorgungseinrichtung (50) von dem Gehäuse (52) in ein unabhängiges Luftfeld eingeteilt werden kann, und zum Ausführen von Luftkonvektion und -austausch in einem Wärmeableitvorgang Außenluft direkt in das Tower-Gehäuse (30) gesaugt wird.

10. Computersystem mit Tower-Gehäuse nach Anspruch 1, wobei der vordere Träger (32) des Tower-Gehäuses (30) eine Frontblende (35) und ein erstes elektronisches Bauteil (36) aufweist, das in die Frontblende (35) eingebettet ist, und die erste Montagekammer (301) ein zweites elektronisches Bauteil (60) enthält.

11. Computersystem mit Tower-Gehäuse nach Anspruch 1, wobei der U-förmige Körper des Tower-Gehäuses (30) ferner ein Verbindungselement (38) aufweist, das daran angebracht ist, um eine Rahmenkonstruktion (39) zu formen.

## Revendications

1. Système d'ordinateur de type tour, comprenant :
- un châssis de tour (30), qui est un corps en forme de U composé d'un fond (31), d'une baie avant (32) et d'une baie arrière (33) ;
- un ensemble de montage composé d'une carte verticale (34), installée à la section moyenne du châssis de tour (30), et couplée entre la baie avant (32) et la baie arrière (33) avec une carte-mère (40) montée sur la carte de liaison verticale (34), de telle sorte que le châssis de tour en forme de U (30) est séparé en une première chambre d'assemblage (301) ayant une ouverture alignée vers le côté gauche et une seconde chambre d'assemblage (302) ayant une ouverture alignée vers le côté droit ;
- un premier port d'accès de connexion électrique (303), disposé dans la direction verticale sur la baie arrière (33) et à une position proche de la carte de liaison verticale (34), et situé dans une zone à l'intérieur de la première chambre d'assemblage (301) ;
- un second port d'accès de connexion électrique (304) disposé dans la direction verticale sur la baie arrière (33) et à une position proche de la carte de liaison verticale (34), situé dans une zone à l'intérieur de la seconde chambre d'assemblage (302), et étant parallèle à la carte de liaison verticale (34) et au premier port d'accès de connexion électrique (303) ;
- un panneau avant (35) disposé sur la baie avant (32) du châssis de tour (30) et ayant un premier composant électronique (36) composé d'un lecteur de disque ou d'un disque dur ; et
- un capot en forme de U (37) pour le châssis de tour (30), le capot ayant des trous de ventilation (371),
la carte-mère (40) comprenant un port de connexion (45) érigé à partir de l'arrière du côté avant et opposé au premier port de connexion électrique (303), de telle sorte que la carte-mère (40) est installée dans une direction longitudinalement perpendiculaire dans la première chambre d'assemblage (301), et la carte-mère (40) comprenant un premier dissipateur de chaleur (41) ayant un ventilateur (42) installé sur le côté avant de la carte-mère (40), **caractérisé par le fait que** :
le second port de connexion électrique (304) comprend un module de support (70) couplé au second port d'accès de connexion électrique (304), et le module de support (70) comprend un cadre de support (71) pour supporter un adaptateur de dispositif d'affichage ou une carte graphique (73), et le cadre de support (71) comprend un port de connexion électrique d'entrée/sortie (72) disposé sur le côté arrière du cadre de support (71) et opposé au second port d'accès de connexion électrique (304) et couplé au second port d'accès de connexion électrique (304), de telle sorte que le module de support (70) est disposé dans la seconde chambre d'assemblage (302) et agencé parallèlement dos à dos avec la carte-mère (40) et l'un adjacent à l'autre, et l'adaptateur de dispositif d'affichage ou la carte graphique (73) comprend une carte de circuits imprimés (731) et un second dissipateur de chaleur (732) ayant un ventilateur (733) installé sur le côté avant de la carte de circuits imprimés (731), de telle sorte que le second dissipateur de chaleur (732) est dos à dos avec le premier dissipateur de chaleur (41) sur le côté avant de la carte-mère (40), et à la fois les premier et second dissipateurs de chaleur (41), (732) sont proches des côtés latéraux du châssis de tour (30), de telle sorte que les ventilateurs (42), (733) des premier et second dissipateurs de chaleur (41), (732) aspirent l'air extérieur des deux côtés et soufflent l'air aux premier et second dissipateurs de chaleur (41), (732).

2. Système d'ordinateur de type tour selon la revendication 1, dans lequel la carte de liaison verticale (34) comprend une plaque de liaison avant (341) et une plaque de liaison arrière (342) faisant saillie à partir de côtés internes des baies respectivement avant et arrière (32), (33) du châssis de tour (30), et une carte de liaison (34) couplée entre les plaques de liaison avant et arrière (341), (342).

3. Système d'ordinateur de type tour selon la revendication 1, dans lequel le fond (31) et la baie arrière (33) du châssis en tour (30) comprennent une pluralité de trous de ventilation (305) formés à une section moyenne.

4. Système d'ordinateur de type tour selon la revendication 1, dans lequel le module de support (70) comprend un module de cadre de support mobile (70A) qui peut être ouvert et fermé, et un côté arrière du module de cadre de support mobile (70A) est disposé pour installer un élément d'engagement/désengagement (72a) du port de connexion électrique d'entrée/sortie (72), et couplé à l'élément d'engagement/désengagement (72a) pour installer un cadre de support (71) de l'adaptateur de dispositif d'affichage ou de la carte graphique (73), et le second port d'accès de connexion électrique (304) est une fente en forme de L ou en forme de U (332), (333) correspondant à la forme du module de cadre de support mobile (70A), et soit un côté, soit les deux côtés de la baie arrière (33) sont disposés pour installer un ou deux modules de cadre de support mobiles (70A), de telle sorte que, lorsque la fente est fermée, le module de cadre de support mobile (70A) est situé entre les baies avant et arrière (32), (33) et disposé pour installer l'adaptateur de dispositif d'affichage ou la carte graphique (73) sur le module de cadre de support mobile (70A).

5. Système d'ordinateur de type tour selon la revendication 4, dans lequel la fente (332) de la baie arrière (33) comprend une base de pivot arrière (331), et l'élément d'engagement/désengagement (72a) du module de cadre de support mobile (70A) comprend un trou de pivot arrière (721) formé sur celui-ci, de telle sorte qu'un premier pivot (722) peut être installé de façon pivotante sur la base de pivot arrière (331), et le module de cadre de support mobile (70A) peut être soulevé ouvert de l'avant à l'arrière à l'aide de la base de pivot arrière (331) en tant qu'axe, et lorsque le module de cadre de support mobile (70A) est fermé, une première plaque de bride (74) installée sur un côté avant du cadre de support (71) est fixée à la première plaque de positionnement (321) installée à une position opposée à la baie avant (32).

6. Système d'ordinateur de type tour selon la revendication 5, dans lequel la baie avant (32) du châssis de tour (30) comprend une base de pivot avant (322), et le module de cadre de support mobile (70A) comprend un trou de pivot avant (741) formé à une extrémité avant du cadre de support (71), et un second pivot (75) est installé de façon pivotante sur la base de pivot avant (322), de telle sorte que le module de cadre de support mobile (70A) peut être soulevé ouvert de la fente (333) au côté avant à l'aide de la base de pivot avant (322) en tant qu'axe, et lorsque le module de cadre de support mobile (70A) est fermé, l'élément d'engagement/désengagement (72a) du module de cadre de support mobile (70A) est installé dans la fente (333), et une seconde plaque de bride (76) installée sur l'élément d'engagement/désengagement (72a) est disposée pour fixer une seconde plaque de positionnement (334) installée à une position opposée à la baie arrière (33).

7. Système d'ordinateur de type tour selon la revendication 5, dans lequel la fente de la baie arrière (33) est une fente en forme de L (332), et la fente en forme de L (332) comprend une base de pivot (335) disposée axialement sur un côté supérieur interne de la fente en forme de L (332), de telle sorte que l'élément d'engagement/désengagement (72a) du module de cadre de support mobile (70A) peut être soulevé du fond à la partie supérieure à l'aide de la base de pivot (335) en tant qu'axe, et lorsque le module de cadre de support mobile (70A) est fermé, l'élément d'engagement/désengagement (72a) du module de cadre de support mobile (70A) est installé dans la fente (332), et une première plaque de bride (74) installée sur l'avant du cadre de support (71) est disposée pour fixer une première plaque de positionnement (321) installée à une position opposée à la baie avant (32).

8. Système d'ordinateur de type tour selon la revendication 1, dans lequel la seconde chambre d'assemblage (302) sur le côté arrière de la carte-mère (40) comprend un dispositif d'alimentation électrique (50) équipé d'un boîtier (52) et d'un ventilateur (51), et le dispositif d'alimentation électrique (50) est installé parallèle et adjacent à la carte-mère (40) et proche d'un côté latéral du châssis de tour (30), de telle sorte que, par la séparation du boîtier (52) avec la carte-mère (40) et autres composants électroniques, le dispositif d'alimentation électrique (50) constitue un champ de vent indépendant pour aspirer de l'air extérieur dans le châssis de tour (30) pour réaliser une convection et un échange d'air dans un fonctionnement de dissipation de chaleur.

9. Système d'ordinateur de type tour selon la revendication 1, comprenant en outre un dispositif d'alimentation électrique (50) équipé d'un boîtier (52) et d'un ventilateur (51) et installé dans une direction dos à dos de la carte-mère (40) et à une position au bord avant du châssis de tour (30), et le dispositif d'alimentation électrique (50) est installé à une extrémité avant de la première chambre d'assemblage (301) et de la seconde chambre d'assemblage (302), de telle sorte que le dispositif d'alimentation électrique (50) peut être divisé par le boîtier (52) en un champ de vent indépendant, et de l'air extérieur est aspiré dans le châssis de tour (30) directement pour réaliser une convection et un échange d'air dans un fonctionnement de dissipation de chaleur.

10. Système d'ordinateur de type tour selon la revendication 1, dans lequel la baie avant (32) du châssis de tour (30) comprend un panneau avant (35) et un premier composant électronique (36) intégré dans le panneau avant (35), et la première chambre d'assemblage (301) contient un second composant électronique (60).

11. Système d'ordinateur de type tour selon la revendication 1, dans lequel un corps en forme de U du châssis de tour (30) comprend en outre un élément de liaison (38) installé sur celui-ci pour former une structure de cadre (39).
